# EUROPEAN PATENT SPECIFICATION

(11) **EP 3 217 810 B1**
(45) Date of publication and mention of the grant of the patent: **05.01.2022**
(21) Application number: 15859715.3
(22) Date of filing: 09.11.2015
(51) Int. Cl.: A23L 5/00, A21D 13/37

(54) **CO-EXTRUDED SNACK PRODUCT**
KOEXDRUDIERTES IMBISSPRODUKT
PRODUIT DE GRIGNOTAGE CO-EXTRUDÉ

(30) Priority: 10.11.2014 US 201462077554 P
(43) Date of publication of application: 20.09.2017
(73) Proprietor: Intercontinental Great Brands LLC, East Hanover, NJ 07936 (US)
(72) Inventor: RODRIGUEZ, Ana, Patricia, East Hanover, NJ 07936 (US); SMITH, Julie, East Hanover, NJ 07936 (US); KINO, Alan, East Hanover, NJ 07936 (US); ERRANDONEA, Francois, P., East Hanover, NJ 07936 (US); KASEGRANDE, Gay, East Hanover, NJ 07936 (US); PATEL, Nimesh, K., East Hanover, NJ 07936 (US); ESPINOSA, Minerva, Jimenez, East Hanover, NJ 07936 (US)
(74) Representative: Boult Wade Tennant LLP
(86) International application number: PCT/US2015/059724
(87) International publication number: WO 2016/077224

(56) References cited:
- EP-A2- 0 251 630
- WO-A1-2008/040705
- DE-U1- 20 311 418
- US-A- 4 762 723
- US-A- 4 889 730
- US-A- 5 223 292
- US-A1- 2010 239 720
- US-A1- 2010 310 750
- US-A1- 2010 316 772
- None

## Description

### BACKGROUND OF THE INVENTION

Many extruded food products have a texture that is hard and crunchy. It is desirable to produce extruded products that have a crispy texture.

EP0251630 relates to a coextruded cookie having a high sugar content being formed by continuous coextrusion. A crisp external cookie-like casing is simultaneously coextruded with a soft internal cream filling. The external casing contains between about 2% and about 35% sugar. EP0251630 also relates to a process for making a coextruded cookie having a high sugar content. The process includes the steps of mixing, feeding, coextruding, and machining an external casing composition of high sugar content and an internal filling composition of high sugar content.

The present invention relates to a crispy co-extruded foodstuff and a method of co-extruding a baked foodstuff.

### BRIEF SUMMARY

The present invention provides a crispy co-extruded foodstuff and a method of co-extruding a baked foodstuff according to the appended claims.

The invention provides a crispy co-extruded foodstuff comprising an extruded casing having a flour component that includes from 37% to 92% by weight wheat flour, and greater than 0 wt% up to 20 wt% of non-wheat flour, wherein the non-wheat flour includes at least one of corn flour, potato flour and rice flour, wherein said flours each refer to a flour or a meal with various particle sizes; and an extruded filling disposed within the extruded casing wherein filling weight is from 20 wt% to 75 wt% of total weight of the co-extruded foodstuff. The invention provides a crispy co-extruded foodstuff comprising an extruded casing having a flour component that includes from 37% to 92% by weight wheat flour and greater than 0 wt% up to 20 wt% of non-wheat flour as described in the claims and from about 3% to about 30% by weight sugar; an extruded filling disposed within the extruded casing wherein filling weight is from 20 wt% to 75 wt% of total weight of the co-extruded foodstuff; and wherein the overall co-extruded foodstuff has a density of 0.45 g/mL to 0.85 g/mL. In some embodiments the extruded casing includes about 10 wt% to about 20 wt% of sugar.

In some embodiments, a crispy co-extruded foodstuff according to any embodiment described herein has a density of about 0.6 g/mL to about 0.8 g/mL. In some embodiments, a crispy co-extruded foodstuff according to any embodiment described herein has an Aw of about 0.1 to about 0.6. In some embodiments, a crispy co-extruded foodstuff according to any embodiment described herein has a moisture content of about 0.5 wt% to about 4 wt% of the weight of the co-extruded foodstuff. In some embodiments, a crispy co-extruded foodstuff according to any embodiment described herein comprises a filling that has a viscosity of from about 2500 cP to about 25000 cP. In some embodiments, a crispy co-extruded foodstuff according to any embodiment described herein has a length dimension that is greater than a width dimension and has a compressive strength along the width dimension of from about 150 g to about 1200 g. In some embodiments, a crispy co-extruded foodstuff according to any embodiment described herein has a length dimension that is greater than a width dimension and has a compressive strength along the length dimension of from about 220 g to about 1300 g.

In some embodiments a crispy co-extruded foodstuff according to any embodiment described herein includes a casing that comprises from about 5% to about 15% by weight cocoa, from about 5% to about 30% by weight cocoa, from about 9% to about 18% by weight cocoa, or from about 10% to about 15% by weight cocoa.

The invention also provides a method of co-extruding a baked foodstuff comprising mixing a casing material comprising from 37% to 92% by weight wheat flour and greater than 0 wt% up to 20 wt% of non-wheat flour as defined by the claims and from 3% to 30% sugar, optionally from about 10% to about 20% by weight sugar; mixing a filling material comprising a solid fat, a liquid fat, and sugar; and co-extruding the casing material and filling material at filling to casing ratio of about 1:4 to about 3:1 to produce a co-extruded rope.

### BRIEF DESCRIPTION OF THE SEVERAL VIEWS OF THE DRAWINGS

The foregoing summary, as well as the following detailed description of certain embodiments of the food product will be better understood when read in conjunction with the following exemplary embodiments, the appended drawings, and the appendices.
Fig. 1 is a side cut-away view of an idealized embodiment of the invention;
Fig. 2 is a top-view of representative samples of an embodiment of the invention;
Fig. 3 is a top view of a representative sample of an embodiment of the invention;
Fig. 4 is a side-view of a representative sample of an embodiment of the invention;
Fig. 5 is a side cut-away view of a representative sample of an embodiment of the invention;
Fig. 6 is a top view of a representative sample of an embodiment of the invention;
Fig. 7 is a side-view of a representative sample of an embodiment of the invention;
Fig. 8 is a side cut-away view of a representative sample of an embodiment of the invention;
Fig. 9 is a top-view of representative samples of an embodiment of the invention;
Fig. 10 is a process flow diagram of an embodiment of the invention;
Fig. 11 is a top-view of an exemplary crimper mold that can be used in embodiments of the invention;

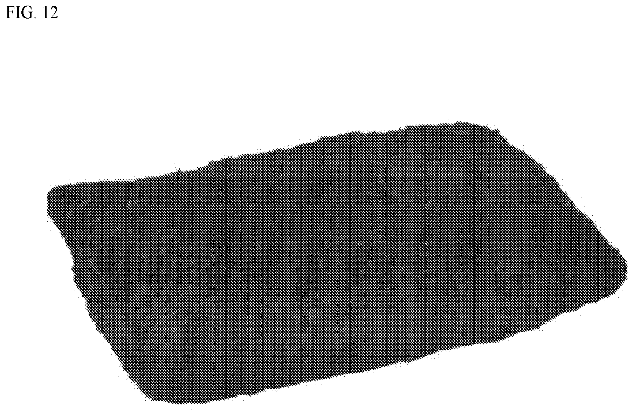

Fig. 12 is a top view of a representative sample of an embodiment of the invention;

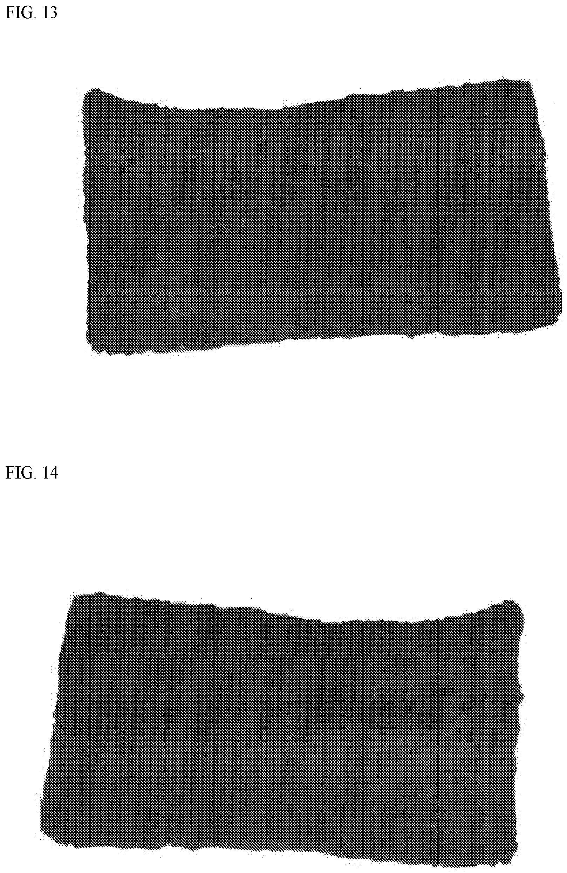

Fig. 13 is a top view of a representative sample of an embodiment of the invention;
Fig. 14 is a top view of a representative sample of an embodiment of the invention;

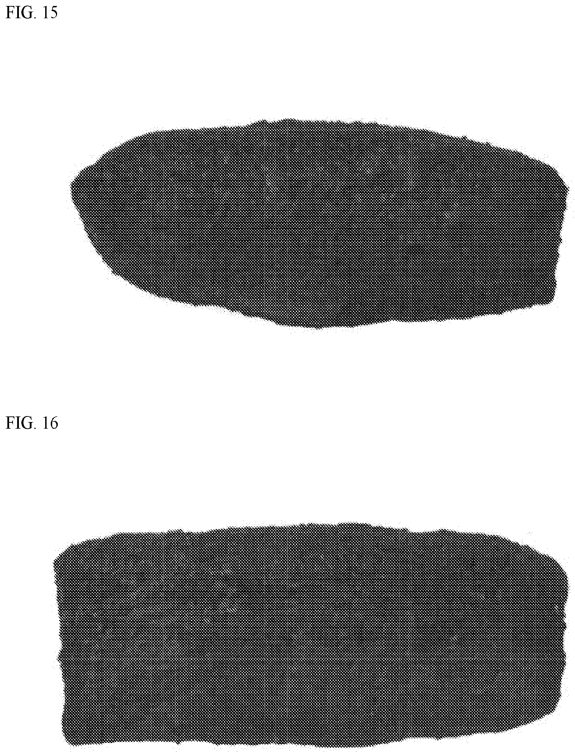

Fig. 15 is a side-view of a representative sample of an embodiment of the invention;
Fig. 16 is a top view of a representative sample of an embodiment of the invention;

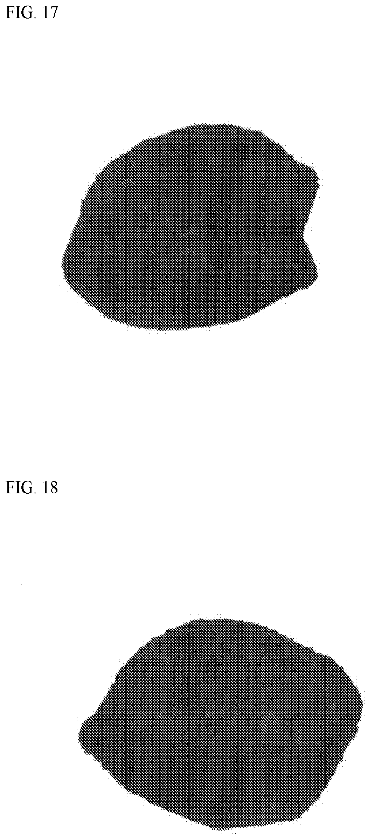

Fig. 17 is a side-view of a representative sample of an embodiment of the invention;
Fig. 18 is a side-view of a representative sample of an embodiment of the invention;

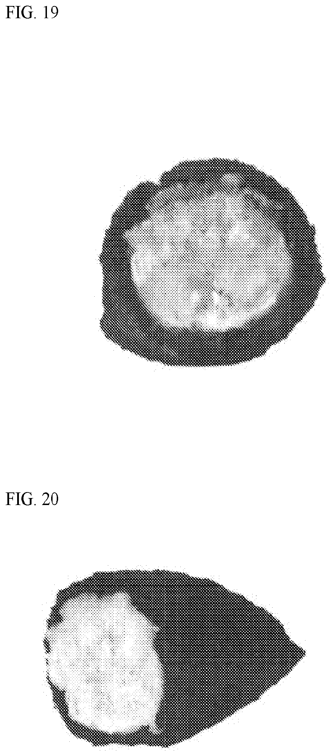

Fig. 19 is a side cut-away view of a representative sample of an embodiment of the invention;
Fig. 20 is a side cut-away view of a representative sample of an embodiment of the invention;

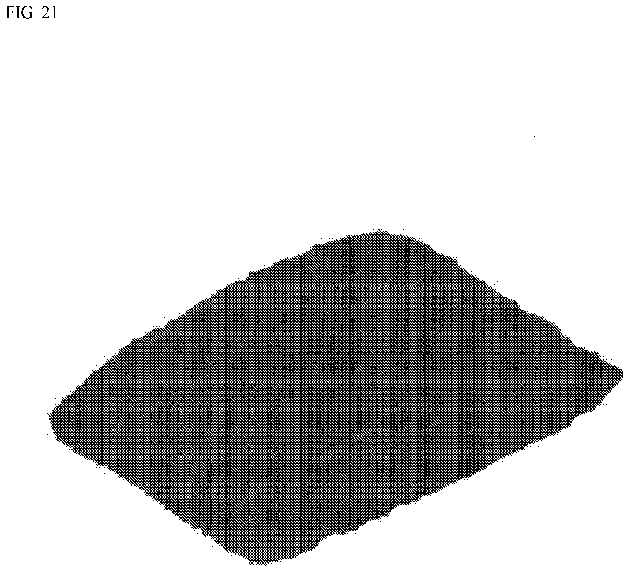

Fig. 21 is a top view of a representative sample of an embodiment of the invention;

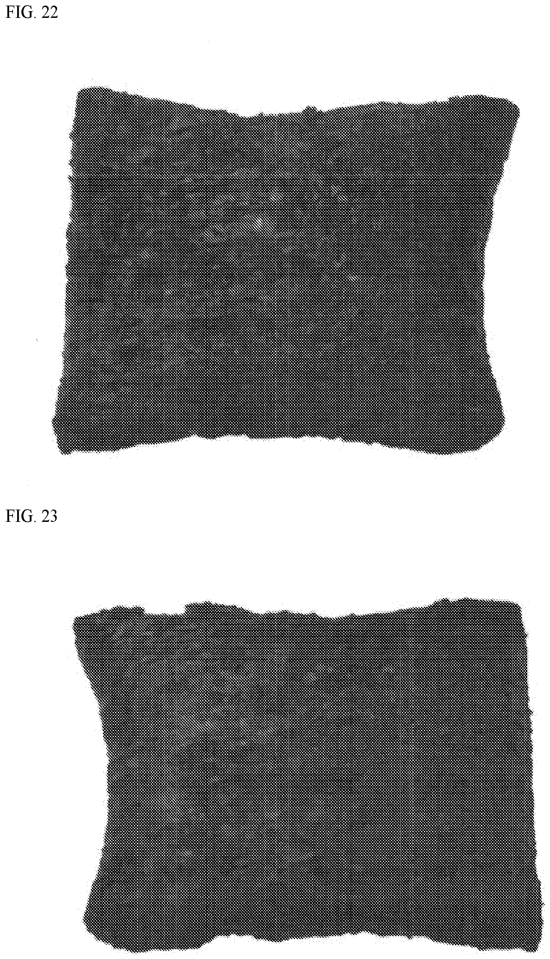

Fig. 22 is a top view of a representative sample of an embodiment of the invention;
Fig. 23 is a top view of a representative sample of an embodiment of the invention;

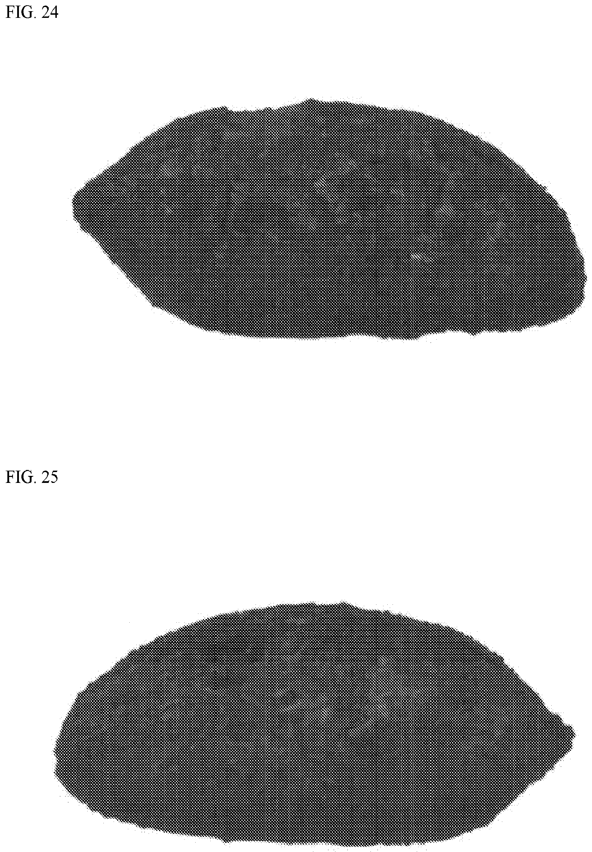

Fig. 24 is a side-view of a representative sample of an embodiment of the invention;
Fig. 25 is a side-view of a representative sample of an embodiment of the invention;

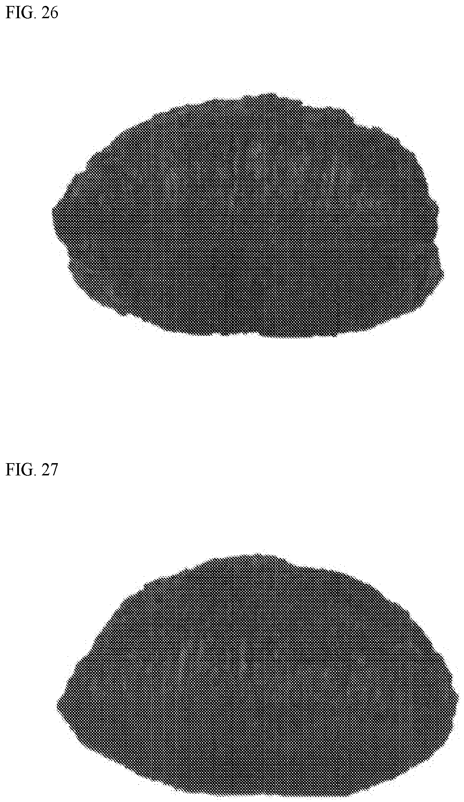

Fig. 26 is a side-view of a representative sample of an embodiment of the invention;
Fig. 27 is a side-view of a representative sample of an embodiment of the invention;

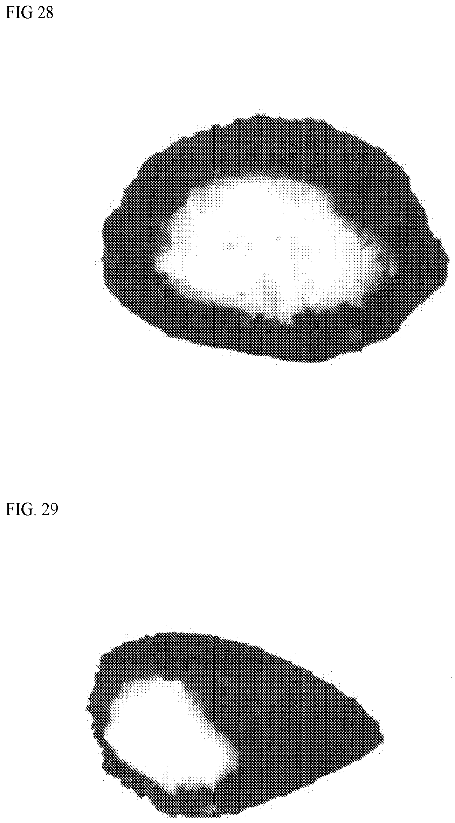

Fig. 28 is a side cut-away view of a representative sample of an embodiment of the invention;
Fig. 29 is a side cut-away view of a representative sample of an embodiment of the invention;

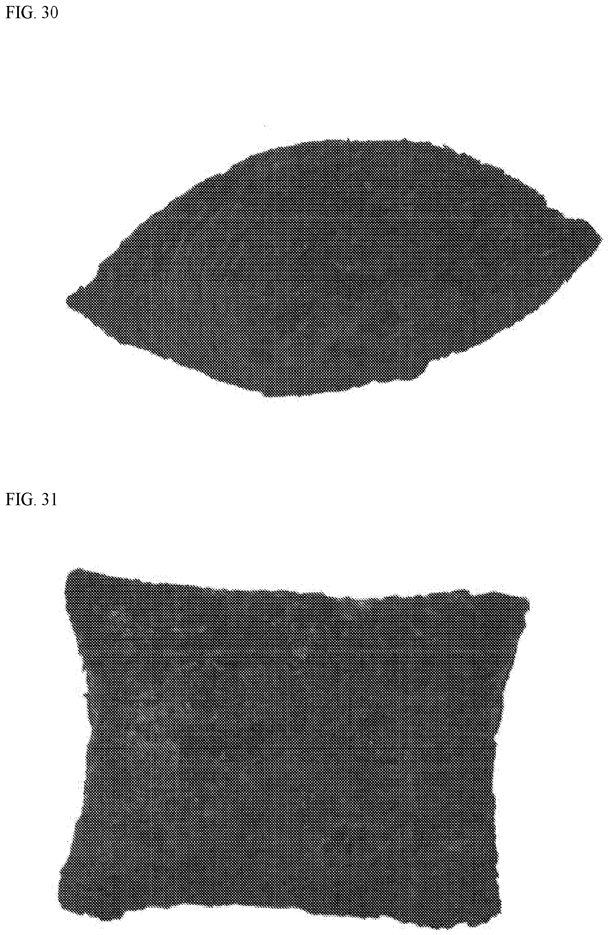

Fig. 30 is a perspective view of a representative sample of an embodiment of the invention;
Fig. 31 is a top view of a representative sample of an embodiment of the invention;

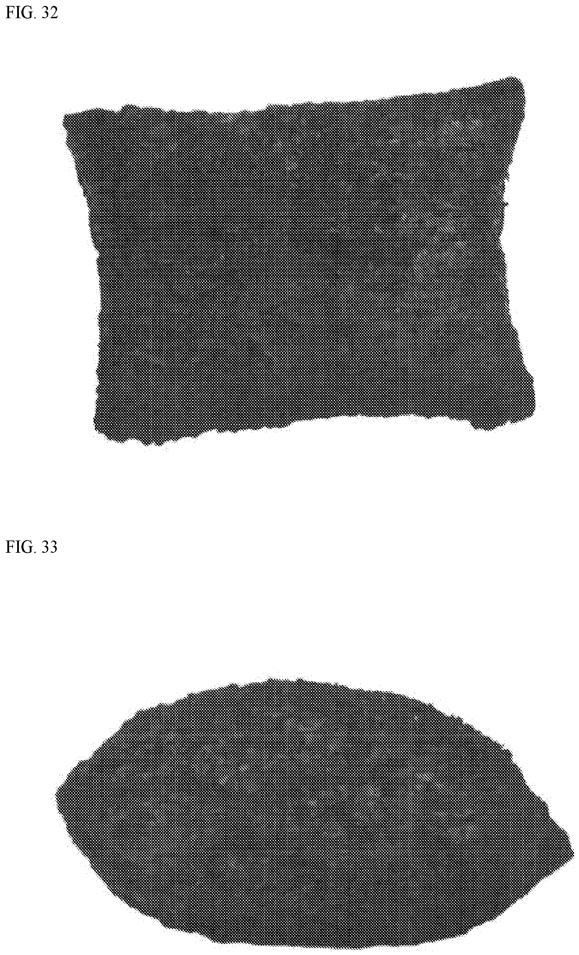

Fig. 32 is a top view of a representative sample of an embodiment of the invention;
Fig. 33 is a side-view of a representative sample of an embodiment of the invention;

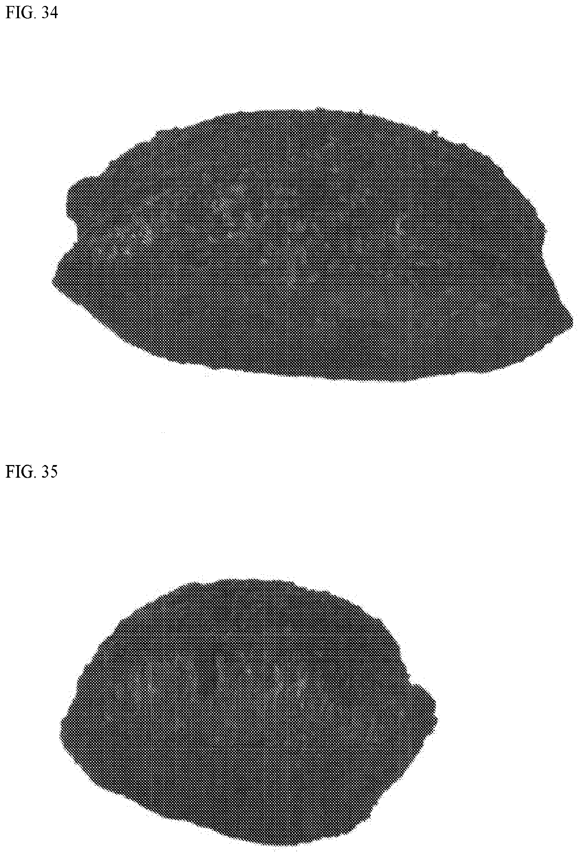

Fig. 34 is a perspective view of a representative sample of an embodiment of the invention;
Fig. 35 is a side-view of a representative sample of an embodiment of the invention;

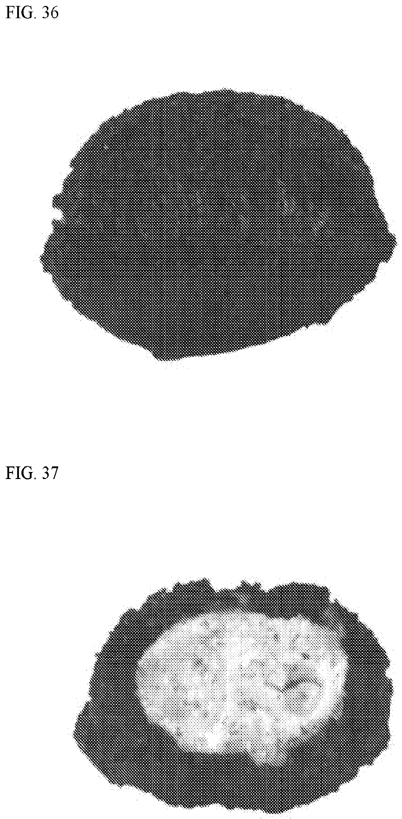

Fig. 36 is a side-view of a representative sample of an embodiment of the invention;
Fig. 37 is a side cut-away view of a representative sample of an embodiment of the invention;

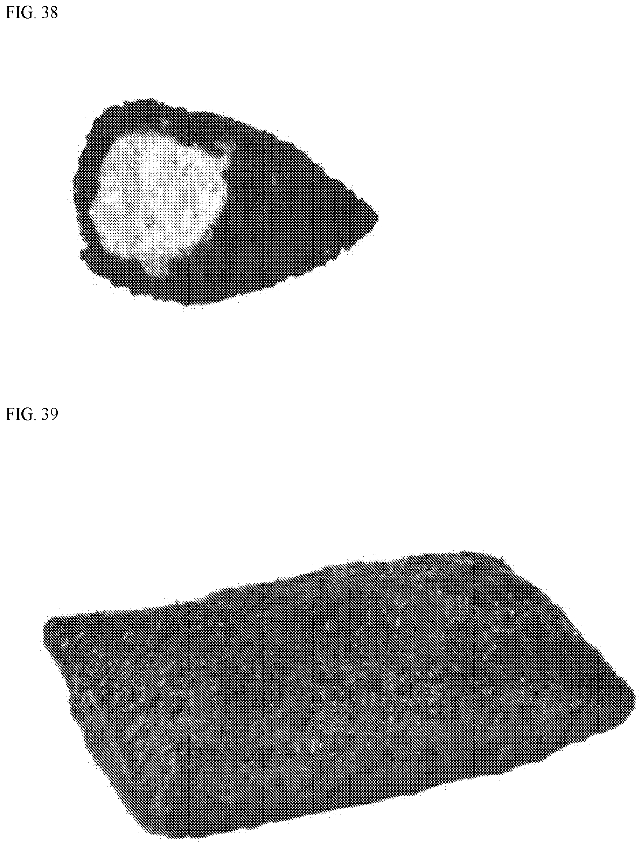

Fig. 38 is a perspective cut-away view of a representative sample of an embodiment of the invention;
Fig. 39 is a perspective view of a representative sample of an embodiment of the invention;

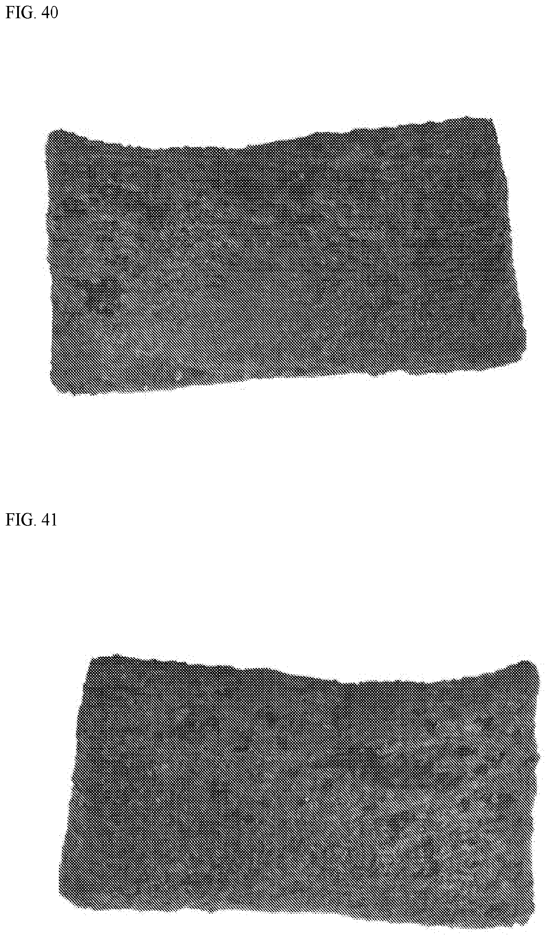

Fig. 40 is a top view of a representative sample of an embodiment of the invention;
Fig. 41 is a top view of a representative sample of an embodiment of the invention;

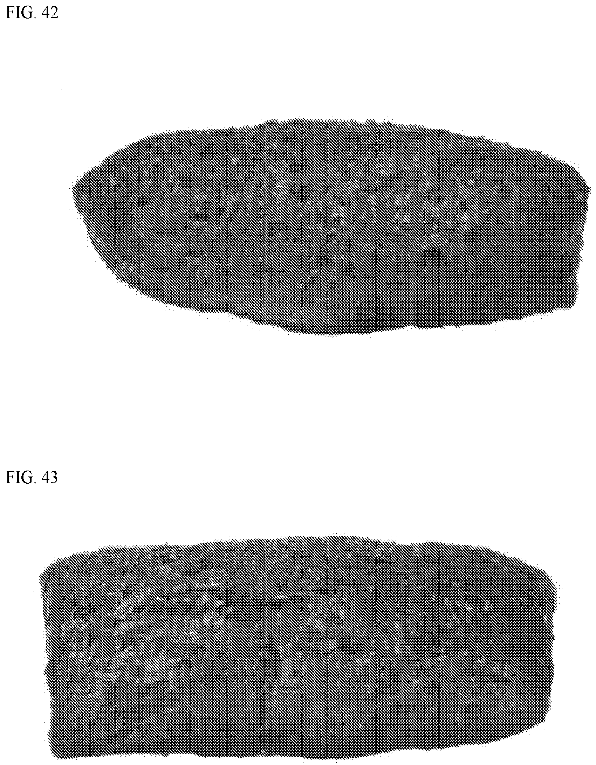

Fig. 42 is a side-view of a representative sample of an embodiment of the invention;
Fig. 43 is a top view of a representative sample of an embodiment of the invention;

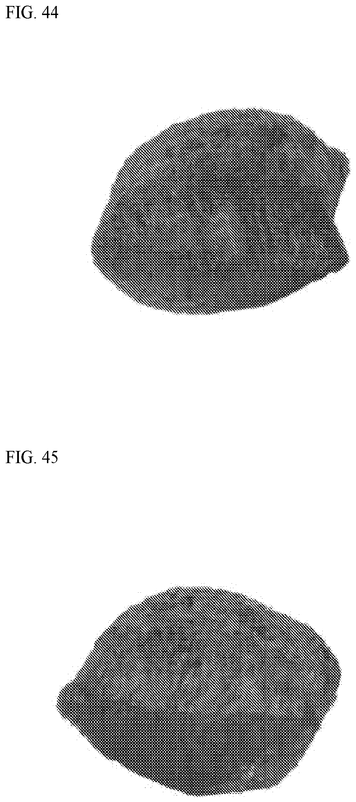

Fig. 44 is a side-view of a representative sample of an embodiment of the invention;
Fig. 45 is a side-view of a representative sample of an embodiment of the invention;

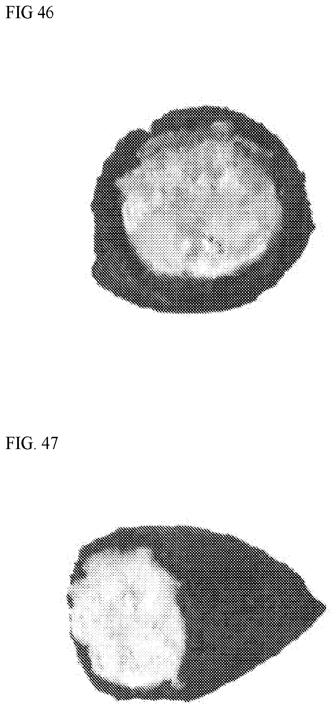

Fig. 46 is a side cut-away view of a representative sample of an embodiment of the invention;
Fig. 47 is a perspective cut-away view of a representative sample of an embodiment of the invention;

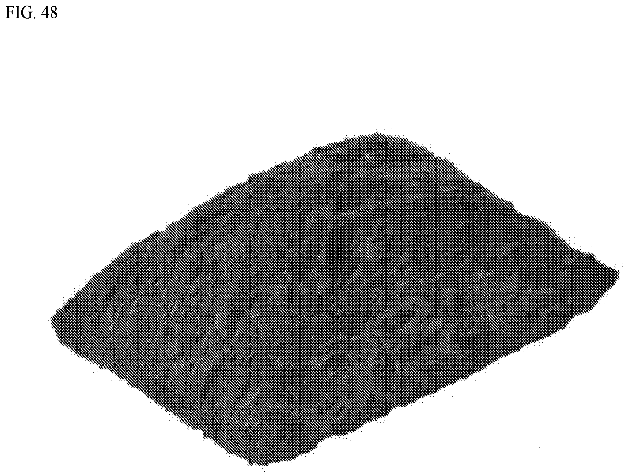

Fig. 48 is a perspective view of a representative sample of an embodiment of the invention;

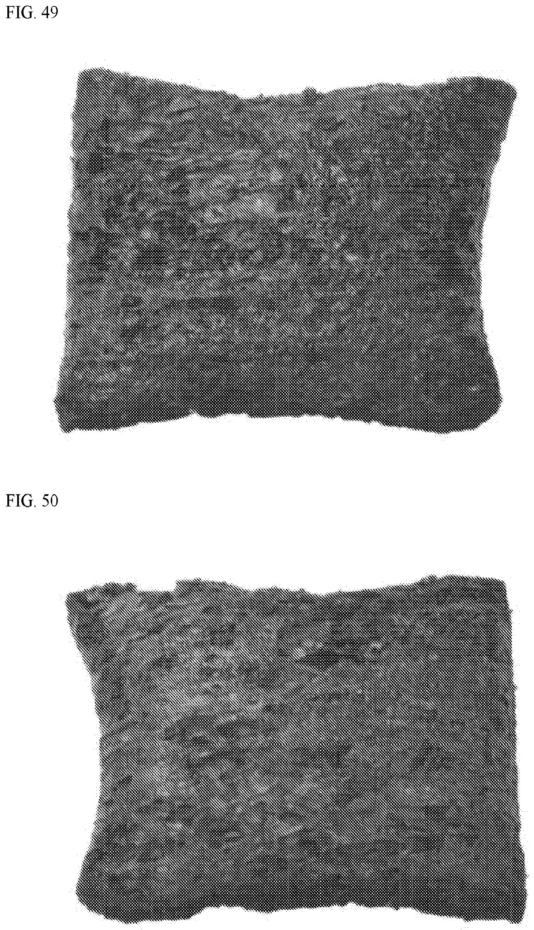

Fig. 49 is a top view of a representative sample of an embodiment of the invention;
Fig. 50 is a top view of a representative sample of an embodiment of the invention;

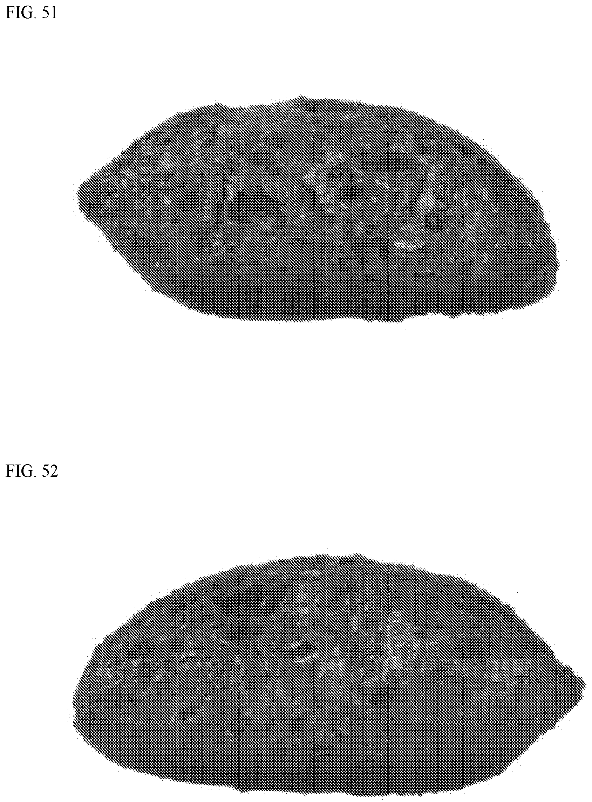

Fig. 51 is a side-view of a representative sample of an embodiment of the invention;
Fig. 52 is a side-view of a representative sample of an embodiment of the invention;

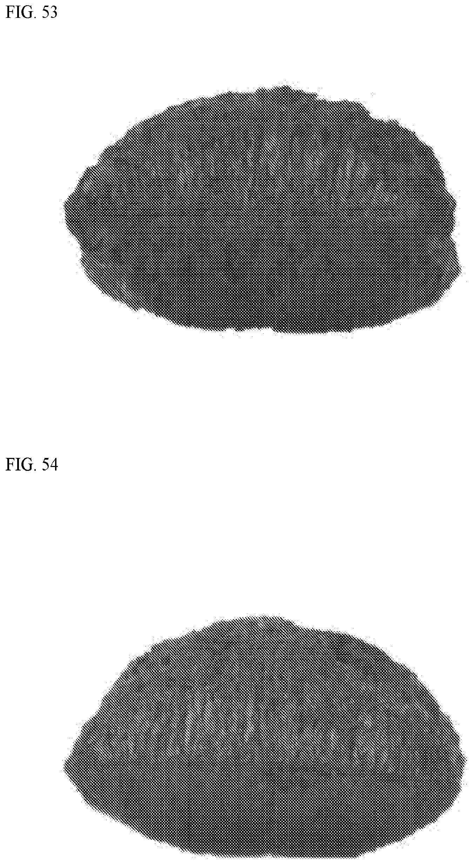

Fig. 53 is a side-view of a representative sample of an embodiment of the invention;
Fig. 54 is a side-view of a representative sample of an embodiment of the invention;

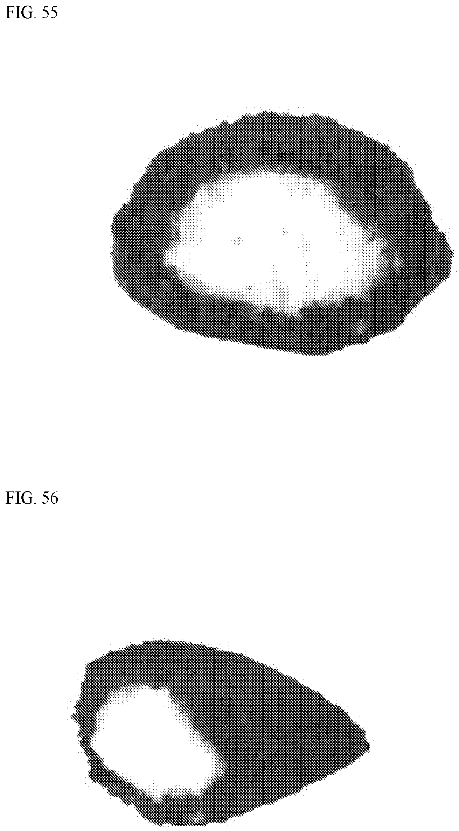

Fig. 55 is a side cut-away view of a representative sample of an embodiment of the invention;
Fig. 56 is a perspective cut-away view of a representative sample of an embodiment of the invention;

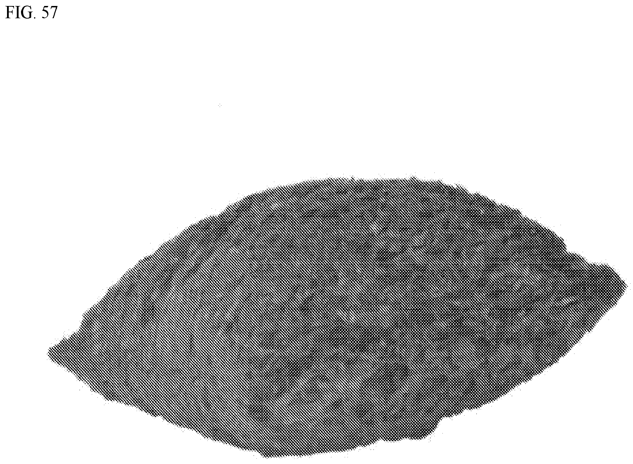

Fig. 57 is a perspective view of a representative sample of an embodiment of the invention;

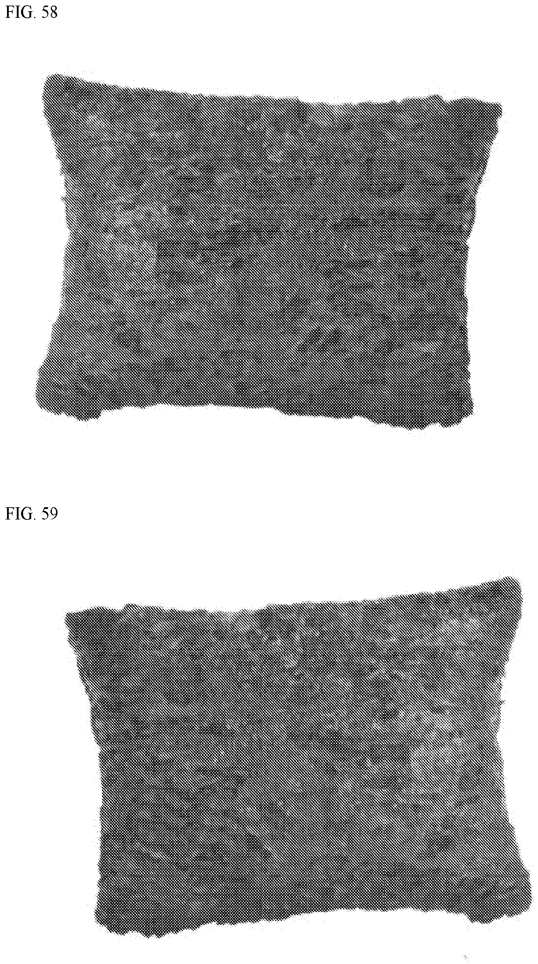

Fig. 58 is a top view of a representative sample of an embodiment of the invention;
Fig. 59 is a top view of a representative sample of an embodiment of the invention;

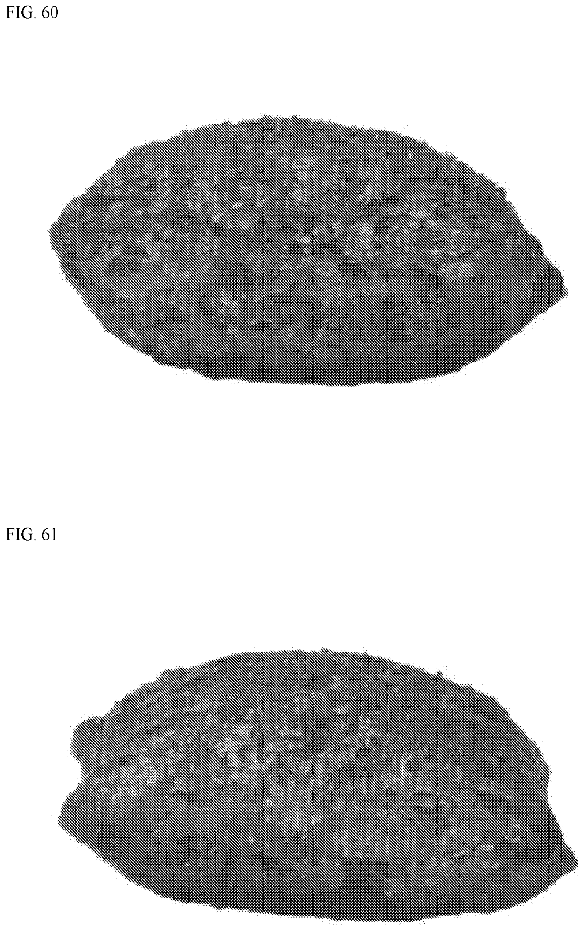

Fig. 60 is a side-view of a representative sample of an embodiment of the invention;
Fig. 61 is a side-view of a representative sample of an embodiment of the invention;

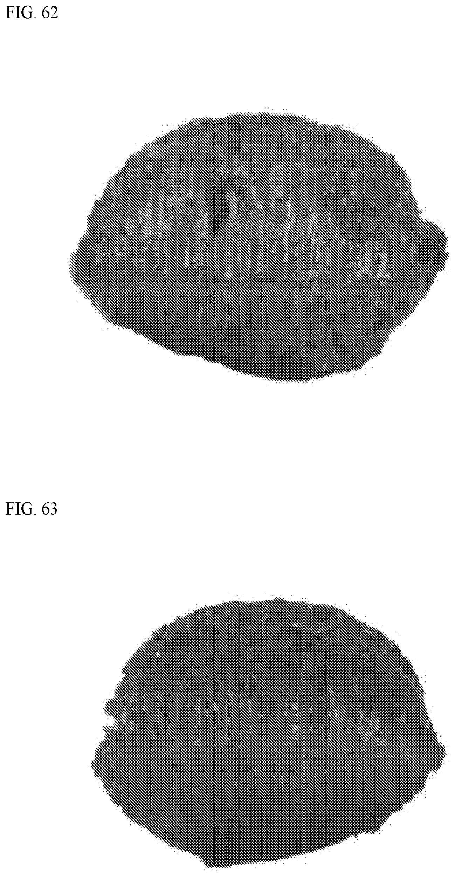

Fig. 62 is a side-view of a representative sample of an embodiment of the invention;
Fig. 63 is a side-view of a representative sample of an embodiment of the invention;

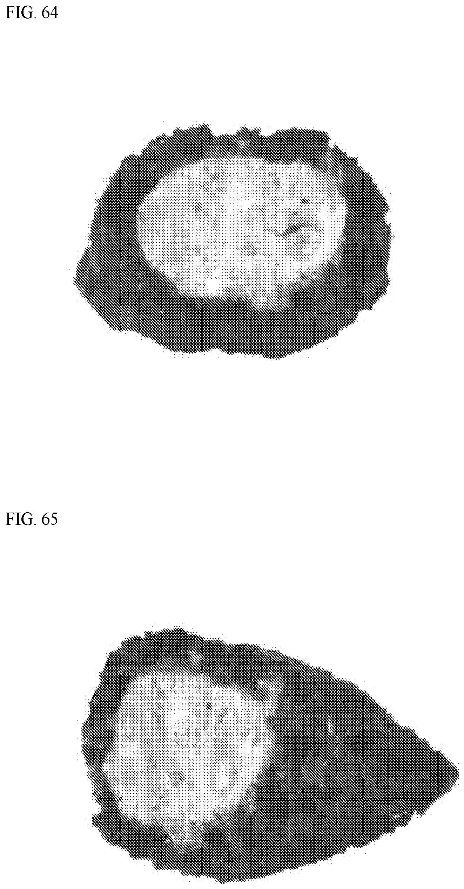

Fig. 64 is a side-view of a representative sample of an embodiment of the invention; and
Fig. 65 is a side cut-away view of a representative sample of an embodiment of the invention.

### DETAILED DESCRIPTION OF THE INVENTION

Compositions and methods of the present invention relate to a co-extruded snack product (also referred to herein as a co-extruded foodstuff) having a casing and a filling, wherein the filling is disposed within the casing.

A casing of a co-extruded snack product according to the invention may have a texture and taste that is crispy. In some embodiments extruded snack products of the invention have a dual texture such as a light, crispy shell and a soft, creamy center. In some embodiments a co-extruded snack product may have a high degree of munchability - that is, a light crispy texture and requiring little effort for the consumer to chew the product. In some embodiments a co-extruded snack product of the invention has gentle, well-balanced flavors. In some embodiments the extruded snack product has a texture that is generally not messy, for example, the extruded snack product may leave few or essentially no crumbs when eaten. In some embodiments extruded snack products of the invention have a smooth appearance.

In some embodiments, a co-extruded snack product has a plump look. In some embodiments a co-extruded snack product has a high percentage of filling. In some embodiments a co-extruded snack product has a dimension sufficiently small that a consumer could easily eat the extruded snack product in a single bite.

In some embodiments extruded snack products of the invention have contrasting colors on the exterior surface. Such contrasting colors may be achieved by, for example, particulates disposed on the exterior surface. In some embodiments one or more of the colors on the surface may signal to the consumer the extruded filling on the center of the product. For example, in some embodiments of a co-extruded snack product having a chocolate casing and a white filling, the exterior surface of the dark casing may have white particulates disposed on it.

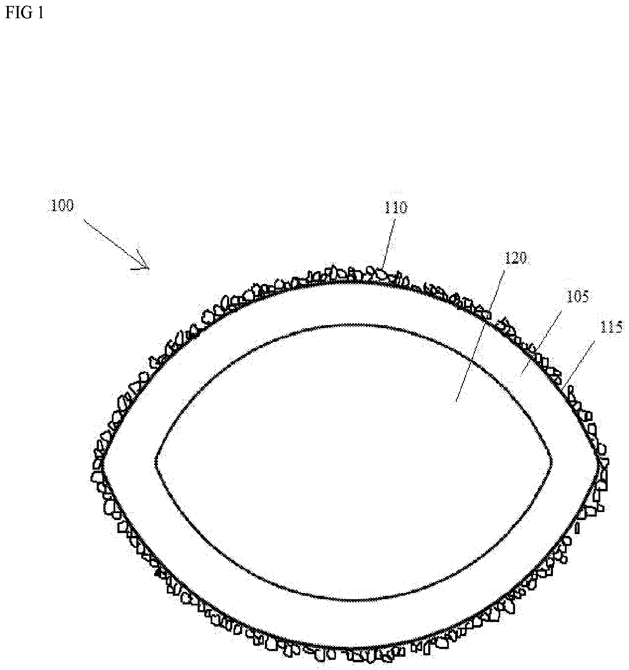

Referring to FIG. 1, in some embodiments a co-extruded snack product can be a coated co-extruded snack product 100. Coated co-extruded snack product 100 of the invention includes a casing component 105 having an external surface 115. In some embodiments the casing component can include a cocoa. Coated co-extruded snack product 100 may also have a particulate component 110 that may at least partially cover the external surface 115 of the casing component 105. In some embodiments the particulate component 110 can include cocoa, agglomerated particles, or a combination of cocoa and agglomerated particles. The coated extruded snack product 100 includes a filling 120 disposed within the casing component 105, such as a crème filling.

The ornamental features of an embodiment are shown in the attached Appendix, which forms a portion of the present Specification.

In some embodiments, the coated co-extruded snack product 100 may generally be prepared by co-extruding a casing portion together with a filling 120 through a co-extrusion die to form a ribbon or rope, shaping the ribbon or rope into individual pieces and applying a binder or coating to an external surface of the individual pieces. Some embodiments further include at least partially coating the individual pieces with a particulate component. In some embodiments, the extruded foodstuff can weigh in the range of from about 0.2g to about 4g, from about 0.25 to about 2g; from about 0.3 g to about 3.75 g, from about 0.4 g to about 3.5 g, from about 0.5 g to about 3.25 g, from about 0.6 g to about 3 g, from about 0.4 g to about 2.75 g, from about 0.5 g to about 2.5 g, from about 0.6 g to about 2.25 g, from about 0.7 g to about 2 g, from about 0.8 g to about 1.75 g or from about 1 g to about 1.5 g. In some embodiments, the extruded foodstuff can weigh about 0.25g, about 0.5 g, about 0.55g, about 0.6g, about 0.65g, about 0.7g, about 0.75g, about 0.8g, about 0.85g, about 0.9g, about 0.95g, about 1 g, about 1.5 g, about 2g, or about 2.5 g.

In other examples of the present disclosure, a co-extruded snack product can be an uncoated extruded snack product. An uncoated extruded snack product can include a casing component. An uncoated extruded snack product can further include a filling disposed inside the casing component. In some examples an uncoated co-extruded snack product can be made in a manner similar to that of a coated extruded snack product, without the step of coating the casing component with a binder/coating and/or a particulate component.

In some embodiments, a co-extruded snack product weighs from about 0.1 g to about 2.5 g, from about 0.5 to about 2 g, from about 0.7 g to about 1.5 g, from about 1 g to about 1.3 g, from about 0.1 g to about 1.5 g, or from about 0.7 g and about 2.5 g.

In some embodiments, a co-extruded snack product weighs about 0.1 g, about 0.3 g, about 0.5 g, about 0.6 g about 0.7 g, about 0.8 g about 0.9 g, about 1 g, about 1.1 g, about 1.2 g, about 1.3 g about 1.4 g, about 1.5 g, about 1.6 g, about 1.7 g, or about 2 g.

In some embodiments, a co-extruded snack product weighs at least 0.1 g, at least 0.3 g, at least 0.5 g, at least 0.6 g at least 0.7 g, at least 0.8 g, at least 0.9 g, at least 1 g, at least 1.1 g, at least 1.2 g, at least 1.3 g at least 1.4 g, or at least 1.5 g.

In some embodiments, a co-extruded snack product weighs up to 0.7 g, up to 0.8 g, up to 0.9 g, up to 1 g, up to 1.1 g, up to 1.2 g, up to 1.3 g, up to 1.4 g, up to 1.5 g, up to 1.6 g, up to 1.7 g, up to 2 g, or up to 2.5 g.

A co-extruded snack product can be characterized by its density (also referred to herein as specific volume). As used herein, an overall density measurement of a co-extruded snack product (i.e. a co-extruded snack product including a casing and a filling, and optionally a coating) is made by dividing the sample volume (cm³ or in³) by the sample weight (g or oz). Specific volume is expressed in cubic centimeters per gram (cm³/g) or cubic inches per ounce (in³/oz). Density or specific volume may be measured in accordance with AACC 10-05.01, which is hereby incorporated by reference in its entirety. In particular, the volume of the extruded snack product can be measured by using a calibrated volumeter to measure the volume of a quantity of rapeseeds, and then measuring the volume of the same quantity of rapeseeds together with the extruded snack product; the difference is the displaced volume, which is equal to the volume of the extruded snack product.

The density measurement of an extruded casing can be indicative of the texture of a co-extruded snack product. For example, a lower density of an empty casing can indicate the extruded snack product has a texture that is crispier, with a lighter, more delicate texture, compared to an empty casing that has a higher density and is crunchier. The density of a casing without filling can be measured by measuring the displaced volume of rapeseeds, as described above and in AACC 10-05.01. The overall density of a co-extruded snack product may be indicative of the texture of the casing if the percentage of filling and the type of filling are taken into account. The following examples are embodiments of the invention when the overall co-extruded foodstuff (100) has a density of 0.45 g/mL to 0.85 g/mL

In some examples according to the present disclosure, a co-extruded snack product has a density from about 0.4 g/mL to about 0.7 g/mL, from about 0.45 g/mL to about 0. 65 g/mL, from about 0.45 g/mL to about 0.85 g/mL, from about 0.5 g/mL to about 0.6 g/mL, from about 0.35 g/mL to about 0.75 g/mL, from about 0.3 g/mL to about 0.8 g/mL, from about 0.25 g/mL to about 0.85 g/mL, from about 0.1 g/mL to about 1 g/mL, from about 0.25 g/mL to about 0.65 g/mL, from about 0.6 g/mL to about 0.8 g/mL, from about 0.5 g/mL to about 0.9 g/mL, or from about 0.45 g/mL to about 0.85 g/mL.

In some examples according to the present disclosure, a co-extruded snack product has a density of about 0.4 g/mL about 0.45 g/mL, about 0.5 g/mL, about 0.55 g/mL, about 0.6 g/mL, about 0.65 g/mL, about 0.7 g/mL, about 0.75 g/mL, about 0.8 g/mL, about 0.85 g/mL, or about 0.9 g/mL.

In some examples according to the present disclosure, a co-extruded snack product has a density of at least 0.35 g/mL, at least 0.4 g/mL, at least 0.45 g/mL, at least 0.5 g/mL, at least 0.55 g/mL, at least 0.6 g/mL, at least 0.65 g/mL, at least 0.7 g/mL, or at least 0.75 g/mL.

A co-extruded snack product can be characterized by its water activity (A_{w}), a measure of the ratio between the vapor pressure of the extruded snack product itself, when in a completely undisturbed balance with the surrounding air media, and the vapor pressure of distilled water under identical conditions. The Aw of a co-extruded snack product can be indicative of the texture of that product. In general, a product with a higher Aw the product will be less crispy.

In some embodiments, a co-extruded snack product has an A_{w} of from about 0.1 to about 1, from about 0.1 to about 0.85, from about 0.1 to about 0.85, from about 0.2 to about 0.7, from 0.25 to about 0. 65, from about 0.3 to about 0.6, from about 0.35 to about 0.55, from about 0.4 to about 0.5, from about 0.3 to about 0.5, from about 0.4 to about 0.6, from about 0.2 to about 0.6, or from about 0.3 to about 0.7.

In some embodiments, a co-extruded snack product has an Aw of about 0.2, about 0.25, about 0.3, about 0.35, about 0.4, about 0.45, about 0.5, about 0.55, about 0.6, about 0.65, about 0.7, or about 0.75.

In some embodiments, a co-extruded snack product has an Aw of at least 0.2, at least 0.25, at least 0.3, at least 0.35, at least 0.4, at least 0.45, at least 0.5, at least 0.55, or at least 0.6.

In some embodiments, a co-extruded snack product has an A_{w} of up to 0.3, up to 0.35, up to 0.4, up to 0.45, up to 0.5, up to 0.55, up to 0.6, up to 0.65, up to 0.7, or up to 0.75.

A co-extruded snack product can be characterized by its moisture content. As used herein, an moisture content measurement of a co-extruded snack product is made

In some embodiments, a co-extruded snack product has a moisture content of from about 0.1 wt % to about 5%, from about 0.5 wt% to about 4 wt%, from about 1 wt% to about 3 wt%, from 0.1 wt % to about 3%, or from about 1 wt% to about 3.5 wt%.

In some embodiments, a co-extruded snack product has a moisture content of about 0.1 wt%, about 0.5 wt%, about 1 wt%, about 1.1 wt%, about 1.2 wt%, about 1.3 wt%, about 1.4 wt%, about 1.5 wt%, about 1.6 wt%, about 1.7 wt%, about 1.8 wt%, about 1.9 wt%, about 2 wt%, about 2.1 wt%, about 2.2 wt%, about 2.3 wt%, about 2.4 wt%, about 2.5 wt%, about 2.6 wt%, about 2.7 wt%, about 2.8 wt%, about 2.9 wt%, about 3 wt%, about 3.5 wt%, about 4 wt%, about 4.5 wt%, or about 5 wt %.

In some embodiments, a co-extruded snack product has a moisture content of at least 0.1 wt%, at least 0.5 wt%, at least 1 wt%, at least 1.1 wt%, at least 1.2 wt%, at least 1.3 wt%, at least 1.4 wt%, at least 1.5 wt%, at least 1.6 wt%, at least 1.7 wt%, at least 1.8 wt%, at least 1.9 wt%, at least 2 wt%, at least 2.1 wt%, at least 2.2 wt%, at least 2.3 wt%, at least 2.4 wt%, at least 2.5 wt%, at least 2.6 wt%, at least 2.7 wt%, at least 2.8 wt%, at least 2.9 wt%, or at least 3 wt%.

In some embodiments, a co-extruded snack product has a moisture content of up to 1 wt%, up to 1.1 wt%, up to 1.2 wt%, up to 1.3 wt%, up to 1.4 wt%, up to 1.5 wt%, up to 1.6 wt%, up to 1.7 wt%, up to 1.8 wt%, up to 1.9 wt%, up to 2 wt%, up to 2.1 wt%, up to 2.2 wt%, up to 2.3 wt%, up to 2.4 wt%, up to 2.5 wt%, up to 2.6 wt%, up to 2.7 wt%, up to 2.8 wt%, up to 2.9 wt%, up to 3 wt%, up to 3.5 wt%, or up to 4 wt%.

A co-extruded snack product can be characterized by its hardness, a measure of the force necessary to crush the extruded snack product. As used herein, a hardness measurement of a co-extruded snack product is made by shearing/crushing individual pieces using a texture analyzer with a 3 mm thick flat bottom blade and slotted base. During the test, the blade proceeds through the sample, shearing/crushing both the top and bottom shell/crust. The maximum force generated during the test represents sample hardness. As used herein, multiple pieces were tested for each variable (typically 30 pieces are tested). The hardness parameters provided herein refer to an average of the maximum force for the replicates for the ample/variable. The hardness parameters provided herein were measured using a TAXT2 or TAXT Plus instrument with a 25 kg or 50 kg load cell preferred (50 kg load cell limit was exceeded for some samples) and equipped with a flat bottom blade (69.8 mm wide, 3 mm thick) with guillotine supports and slotted base. The hardness parameters provided herein were measured using the test settings set forth in Table 1.

**Table 1.**

| | Test type | | Return to start. Measure force in compression |
|---|---|---|---|
| | Pre- test speed | | 1.0 mm/sec |
| | Test speed | | 2.0 mm/sec |
| | Post test speed | | 10.0 mm/sec |
| | Test distance | | 15 mm |
| | Trigger type | | Auto |
| | Trigger Force | | 20 g |
| | | Data rate | 250 pps |

For each measurement, a single piece is placed on the base, centered under the blade. Each piece has a length (long axis) and a width (short axis). The piece is oriented so that the blade passes through the crimped edges on the sides of the sample. Samples can also be tested across the short axis - parallel to rather than through the crimp to assess effect of piece dimensions on the force measured.

In some embodiments, a co-extruded snack product has hardness measured across the length of the sample of from about 100 g to about 1800 g, from about 200 g to about 1400 g, from about 220 to about 1300 g, from about 300 g to about 1300 g, from about 400 g to about 1200 g, from about 500 g to about 1100 g, from about 600 g to about 1000 g, from about 700 to about 900 g, from about 700 g to about 1500 g, from about 600 g to about 1400 g, from about 500 g to about 1300 g, from about 400 g to about 1200 g, from about 300 g to about 100 g, or from about 200 g to about 1000 g.

In some embodiments, a co-extruded snack product has hardness measured across the length of the sample of about 100 g, about 200 g, about 300 g, about 400 g, about 500 g, about 600 g, about 650 g, about 700 g, about 750 g, about 800 g, about 850 g, about 900 g, about 1000 g, about 1100 g, about 1200 g, about 1300 g, about 1400 g, about 1500 g, about 1600 g, about 1700 g, or about 1800 g.

In some embodiments, a co-extruded snack product has hardness measured across the length of the sample of at least 100 g, 200 g, 300 g, 400 g, 500 g, 600 g, 700 g, 800 g, 900 g, 1000 g, 1100 g, 1200 g, 1300 g, 1400 g, or 1500 g.

In some embodiments, a co-extruded snack product has hardness measured across the length of the sample of up to 500 g, 600 g, 700 g, 800 g, 900 g, 1000 g, 1100 g, 1200 g, 1300 g, 1400 g, 1500 g, 1600 g, 1700 g, or about 1800 g.

In some embodiments, a co-extruded snack product has hardness measured across the width of the sample of from about 150 g to about 1200 g, from about 200 g to about 1100 g, from about 300 g to about 1000 g, from about 400 g to about 900 g, from about 500 g to about 800 g, from about 600 g to about 700 g, from about 100 g to about 400 g, from about 200 g to about 500 g, from about 300 to about 600 g, from about 300 g to about 700 g, from about 400 to about 800 g, from about 500 to about 900 g, from about 600 to about 1000 g, from about 700 g to about 1100 g, from about 800 to about 1200 g, or from about 900 to about 1300 g.

In some embodiments, a co-extruded snack product has hardness measured across the width of the sample of about 100 g, about 200 g, about 300 g, about 400 g, about 500 g, about 550 g, about 600 g, about 650 g, about 700 g, about 750 g, about 800 g, about 900 g, about 1000 g, about 1100 g, or about 1200 g.

In some embodiments, a co-extruded snack product has hardness measured across the width of the sample of at least 100 g, 200 g, 300 g, 400 g, 500 g, 600 g, 700 g, 800 g, 900 g, 1000 g, 1100 g, 1200 g, or 1300 g.

In some embodiments, a co-extruded snack product has hardness measured across the width of the sample of up to 100 g, 200 g, 300 g, 400 g, 500 g, 600 g, 700 g, 800 g, 900 g, 1000 g, 1100 g, 1200 g, or 1300 g.

A co-extruded snack product can be characterized by its cell structure. In general, a co-extruded snack product with more cells per unit will result in a lighter snack product than a co-extruded snack product with fewer cells per unit. In general, a co-extruded snack product with smaller cells in a certain volume will result in a lighter snack product. The number of particles in a cross-section of a co-extruded snack product piece can describe a cell structure, as can the number of air pockets in a cross-section of a co-extruded snack product piece (also referred to herein as the porosity of a co-extruded snack product piece). To determine the cell structure, the extruded snack product is prepared by cutting a cross-section on the short axis of the extruded snack product. The cross section is analyzed using a scanning electron microscope (SEM) generally as described in Ryu et al, Cereal Chem. 70(3):291-297, hereby incorporated by reference in its entirety, and by counting the number of particles (or air pockets) in the cross-section of a piece, or by counting the number of particles (or air pockets) in several cross-sections of a piece and averaging over the number of cross-sections examined. As used herein, average number of particles refers to the average number of particles in a cross-section of extruded snack product.

In some embodiments, a co-extruded snack product has an average number of particles per mm² cross-section of a co-extruded snack product of from about 2 to about 6.5, from about 2 to about 6, from about 2 to about 5, from about 3 to about 5, from about 3.5 to about 5.5, from about 4 to about 5, or from about 4.2 to about 4.8.

In some embodiments, a co-extruded snack product has an average number of particles per mm² cross-section of a co-extruded snack product of about 2, about 2.5, about 3, about 3.5, about 3.6, about 3.7, about 3.8, about 3.9, about 4.0, about 4.1, about 4.2, about 4.3, about 4.4, about 4.5, or about 4.6, about 4.7, about 4.8, about 4.9, about 5, about 5.5, or about 6.

In some embodiments, a co-extruded snack product has an average number of particles per mm² cross-section of a co-extruded snack product of up to 6.5, 6, 5.5, 5, 4.9, 4.8, 4.7, 4.6, or 4.5.

The cell structure can also be analyzed by using SEM to analyze a cross-section of a co-extruded snack product and measuring the size of the particles (and/or air pockets) in the extruded snack product. The SEM image can also be used to determine the average particle size by measuring along the long axis of the particle, or by measuring along the long axis of several particles and averaging the measurement over the number of particles examined.

In some embodiments, a co-extruded snack product has an average particle size of from about 0.3 mm to about 0.7 mm, from about 0.3 mm to about 0.6 mm, from about 0.4 mm to about 0.5 mm, from about 0.3 mm to about 0.5 mm, or from about 0.4 mm to about 0.6 mm.

In some embodiments, a co-extruded snack product has an average particle size of about 0.39 mm, about 0.4 mm about 0.41 mm, about 0.42 mm, about 0.43 mm, about 0.44 mm, about 0.45 mm, about 0.46 mm, about 0.47 mm, about 0.48 mm, about 0.49 mm, about 0.5 mm, or about 0.51 mm.

In some embodiments, a co-extruded snack product has an average particle size of at least about 0.39 mm, about 0.4 mm about 0.41 mm, about 0.42 mm, about 0.43 mm, about 0.44 mm, about 0.45 mm, about 0.46 mm, about 0.47 mm, about 0.48 mm, about 0.49 mm, about 0.5 mm, or about 0.51 mm.

In some embodiments, a co-extruded snack product has a moisture content of from about 0.1 wt % to about 5%, from about 0.5 wt% to about 4 wt%, from about 1 wt% to about 3 wt%, from 0.1 wt % to about 3%, or from about 1 wt% to about 3.5 wt%.

In some embodiments, a co-extruded snack product has a moisture content of about 0.1 wt%, about 0.5 wt%, about 1 wt%, about 1.1 wt%, about 1.2 wt%, about 1.3 wt%, about 1.4 wt%, about 1.5 wt%, about 1.6 wt%, about 1.7 wt%, about 1.8 wt%, about 1.9 wt%, about 2 wt%, about 2.1 wt%, about 2.2 wt%, about 2.3 wt%, about 2.4 wt%, about 2.5 wt%, about 2.6 wt%, about 2.7 wt%, about 2.8 wt%, about 2.9 wt%, about 3 wt%, about 3.5 wt%, about 4 wt%, about 4.5 wt%, or about 5 wt %.

In some embodiments, a co-extruded snack product has a moisture content of at least 0.1 wt%, at least 0.5 wt%, at least 1 wt%, at least 1.1 wt%, at least 1.2 wt%, at least 1.3 wt%, at least 1.4 wt%, at least 1.5 wt%, at least 1.6 wt%, at least 1.7 wt%, at least 1.8 wt%, at least 1.9 wt%, at least 2 wt%, at least 2.1 wt%, at least 2.2 wt%, at least 2.3 wt%, at least 2.4 wt%, at least 2.5 wt%, at least 2.6 wt%, at least 2.7 wt%, at least 2.8 wt%, at least 2.9 wt%, or at least 3 wt%.

In some embodiments, a co-extruded snack product has a moisture content of up to 1 wt%, up to 1.1 wt%, up to 1.2 wt%, up to 1.3 wt%, up to 1.4 wt%, up to 1.5 wt%, up to 1.6 wt%, up to 1.7 wt%, up to 1.8 wt%, up to 1.9 wt%, up to 2 wt%, up to 2.1 wt%, up to 2.2 wt%, up to 2.3 wt%, up to 2.4 wt%, up to 2.5 wt%, up to 2.6 wt%, up to 2.7 wt%, up to 2.8 wt%, up to 2.9 wt%, up to 3 wt%, up to 3.5 wt%, or up to 4 wt%.

### Casing Component

### Shape

The casing component can have an external surface and have any shape suitable for a snack-sized foodstuff that can be created from an extruded material, for example using a crimper and/or a chain die cutter. Example shapes include shapes that are generally pillow shaped, spheroid, prolate spheroid (e.g. coffee bean), oblate spheroid (e.g. lentil), and cylindrical (e.g. hockey puck).

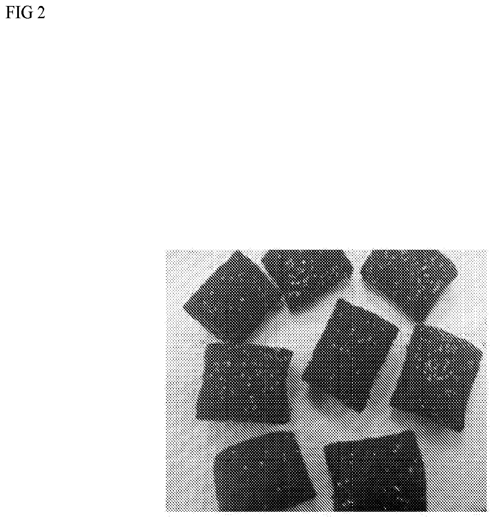

The term "pillow shaped" can be better understood with reference to FIG. 2 and refers to a shape that is generally rectangular when viewed from the top, with sides that may be approximately straight, or may have a slight curvature towards or away from the center of the rectangle, and has the general shape of a *vesica piscis* when a viewed from the side. It is to be understood that the term pillow shaped includes shapes that are not perfectly symmetrical about any axis.

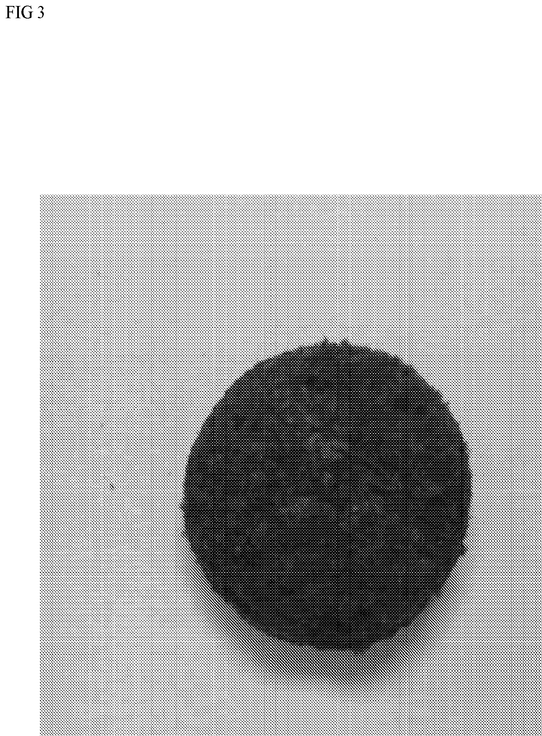

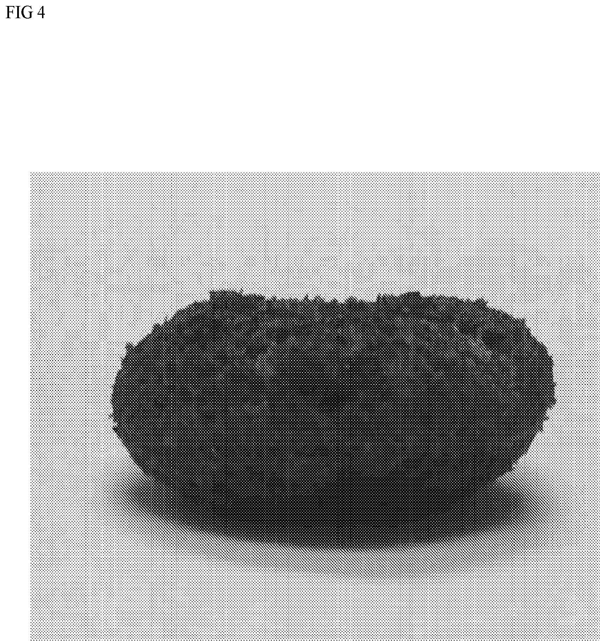

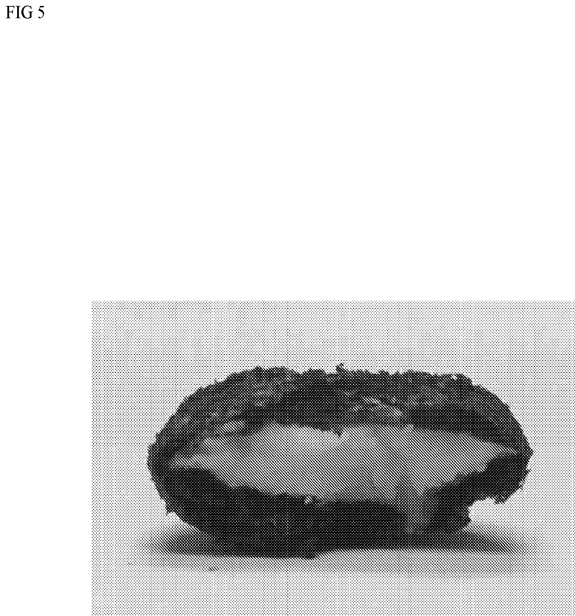

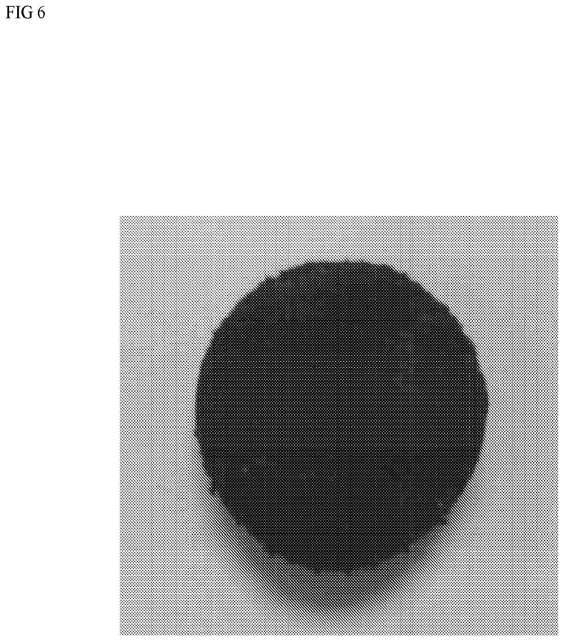

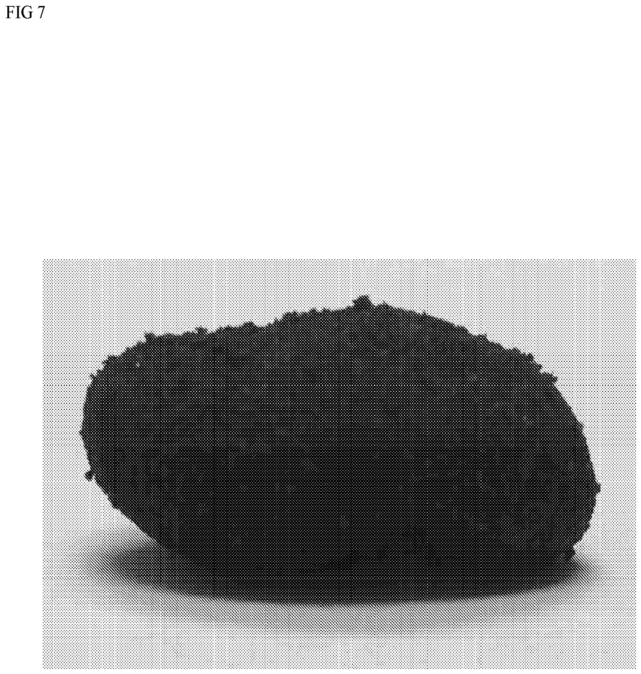

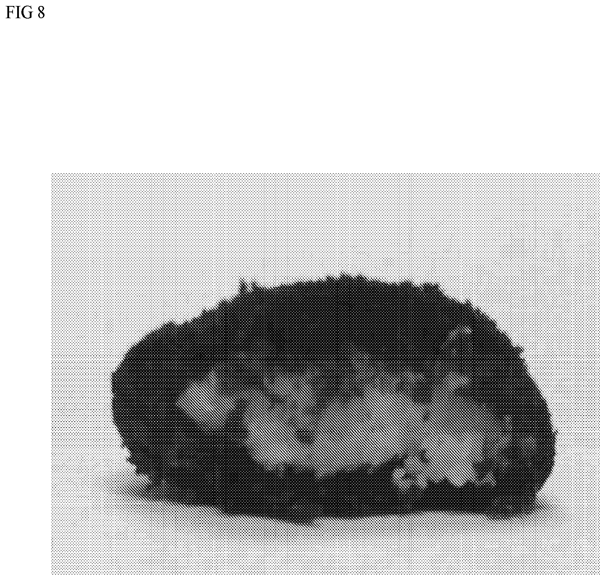

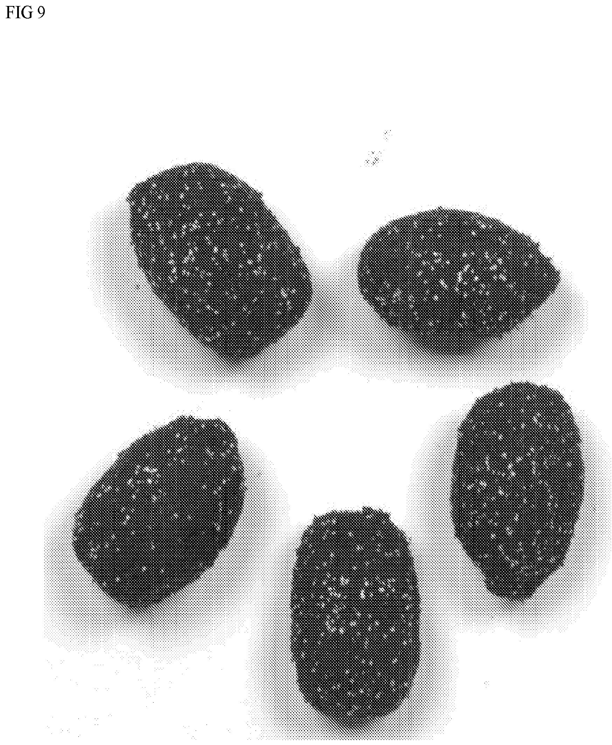

The term "spheroid" can include shapes that approximate a sphere, but have minor variations in the surface and/or are not perfectly symmetrical. The term spheroid can also include sphere-like shapes, such as an oblate spheroid, that resemble a slightly flattened sphere and may be more ovular than circular when viewed from any side, but still retain a generally circular shape when viewed from the top or bottom, similar to that of a lentil. The term oblate spheroid can be better understood with reference to FIGS. 3-8. FIGS. 3 and 6 each show a top view of a co-extruded food product of the invention, with FIG. 3 showing a casing component and FIG. 6 showing a casing component coated with a particulate component. FIGS. 4 and 7 each show a side view of a co-extruded food product of the invention, with FIG. 4 showing a casing component and FIG. 7 showing a casing component coated with a particulate component. FIGS. 5 and 8 each show a cross-section of a co-extruded food product of the invention, with FIG. 5 showing a casing component and a filling disposed inside the casing component and FIG. 8 showing a casing component, a filling disposed inside the casing component, and a particulate component disposed on the external surface of the casing component. The term spheroid can also include sphere-like shapes, such as a prolate spheroid, and can be better understood with reference to FIG. 9. FIG. 9 shows a top view of coated extruded foodstuffs of the invention having a generally prolate spheroid shape. Prolate spheroid can refer to an approximately rotationally symmetric ellipsoid that resembles an oval when viewed from the top, bottom and side, but resembles a circle when viewed from the end, similar to that of a coffee bean. Cylindrical can include cylindrical-like shapes, for example, having slight curvature to the top and/or bottom surface, and/or the edges where the top and/or bottom meet the side.

As shown in FIGS. 3-9, there can be variation in the shape from one extruded foodstuff (coated or uncoated) to the next, and each extruded foodstuff may display variations in the topography that render the extruded foodstuff asymmetrical or somewhat irregularly shaped. For example, there may be variation in the thickness, width, or depth of a single casing component.

### Flour

A casing component of a co-extruded foodstuff of the invention includes a flour or a meal with various particle sizes. It is intended that the term "flour" as used herein refers to a flour or a meal with various particle sizes. Suitable flours include starch-based flour such as whole wheat flour, enriched flour, corn flour, potato flour, rice flour, oat flour, barley flour, corn meal, and the like. The following examples are embodiments of the invention when the extruded casing has a flour component including from 37% to 92% by weight wheat flour, and greater than 0 wt% up to 20 wt% of non-wheat flour, wherein the non-wheat flour includes at least one of corn flour, potato flour and rice flour, wherein said flours each refer to a flour or a meal with various particle sizes.

In some examples according to the present disclosure a flour component of a casing component comprises from about 60 wt% to about 85 wt% wheat flour.

In some examples according to the present disclosure a flour component may comprise a two or more different types of flour. For example, a flour component may comprise wheat flour and non-wheat flour, where non-wheat flour includes one or more of corn flour, potato flour, and rice flour.

In some examples according to the present disclosure, a flour component may comprise from about 0 wt% to about 15 wt%, from about 0 wt% to about 10 wt%, from about 0 wt% to about 5 wt%, or from about 5 wt% to about 10 wt%, of non-wheat flour.

In some examples according to the present disclosure, a flour component may comprise about 2 wt%, about 3 wt%, about 5 wt%, about 10 wt%, about 15 wt% of non-wheat flour.

### Cocoa

The casing components of embodiments of the invention can include a cocoa. In some embodiments, the casing component can include cocoa in an amount from about 5% to about 30% by weight, from about 7% to about 25% by weight, from about 9% to about 18% by weight, from about 10% to about 15% by weight cocoa, from about 15% to about 17% by weight cocoa, about 10% by weight, about 11% by weight, about 12% by weight, about 13% by weight, about 14% by weight, about 15% by weight or about 16% by weight cocoa, of the casing component.

In some embodiments a cocoa component of a co-extruded snack product comprises from about 0% to about 25%, from about 1% to about 24%, from about 5 wt% to about 20 wt%, from about 1 wt% to about 10 wt%, from about 5 wt% to about 15 wt%, from about 10% to about 20%, from about 15 wt% to about 25 wt%, or from about 20% to about 30%, by weight of a co-extruded snack product.

In some embodiments a cocoa component of a co-extruded snack product comprises about 1%, about 2%, about 3%, about 4 wt%, about 5 wt%, about 6 wt%, about 7 wt%, about 8 wt% to about 9 wt%, about 10%, about 15%, about 20%, or about 25 wt% by weight of a co-extruded snack product.

### Sweeteners

The extruded casing of the co-extruded foodstuff comprises from 3% to 30% by weight sugar. In some examples according to the present disclosure, the casing component includes one or more sweeteners, to produce a selected taste and/or texture. Examples of optional sweeteners include high-intensity artificial sweeteners, such as maltitol, polydextrose, saccharin, sucralose, acesulfame potassium, and aspartame, and natural sugars or sweeteners such as granulated sugar, fructose, glucose, sucrose, dextrose, corn syrup, high fructose corn syrup, corn syrup solids, honey, and the like. In some embodiments of the invention, sugars or sweeteners can be employed in amounts up to about 25% by weight of the casing component, and preferably about 15% by weight of the casing component.

In some examples according to the present disclosure a sweetener component of a casing component consists essentially of sugar (e.g. granulated sugar).

In some examples according to the present disclosure, a casing component comprises less than 30 wt%, less than 28 wt%, less than 25 wt%, less than 23 wt%, less than 20 wt%, less than 18 wt%, less than 15 wt%, less than 13 wt%, less than 10 wt%, less than 8 wt%, or less than 5 wt% sweetener (e.g. sugar, granulated sugar) of the total weight of the casing component.

### Additional Ingredients

In some embodiments, additional ingredients may be included in the casing component based on, for example, desired taste, nutrition, texture, and visual appeal of the casing component. Exemplary additional ingredients include, but are not limited to, whole grains, non-whole grains, fiber, leavening agents, sweetening agents, flavor and/or texture inclusions, salt, protein, colors, preservatives, and combinations thereof.

The casing components of the present invention may contain a leavening system. The leavening system may be included in an amount of up to about 2.5 wt% of the casing component, and preferably in an amount of up to about 1 wt% of the casing component, based upon the weight of the casing dry powder blend prior to cooking/extruding. Exemplary chemical leavening agents or pH-adjusting agents which may be used include alkaline materials and acidic materials such as sodium bicarbonate, ammonium bicarbonate, calcium acid phosphate, calcium phosphate monobasic, sodium acid pyrophosphate, diammonium phosphate, tartaric acid, mixtures thereof, and the like.

In addition to, or in substitution of one or more of the foregoing, the casing component employed in some embodiments of the present invention may include other additives conventionally employed in crackers, cookies, or cereals. Such additives may include, for example, protein sources, such as dairy by-products, enzyme modified milk powder, whey, egg or egg by-products, soy or soy isolates, and the like; cocoa, vanilla, vanillin, mint, coffee, or other flavorings; flour substitutes or bulking agents, such as polydextrose, hollocellulose, microcrystalline cellulose, mixtures thereof, and the like; starches such as pre-gelatinized starch and potato starch, and the like; antimycotics or preservatives, such as calcium propionate, potassium sorbate, sorbic acid, and the like; emulsifiers, such as mono- and di-glycerides, polyoxyethylene sorbitan fatty acid esters, lecithin, stearoyl lactylates, and the like; processing aids, such as high oleic canola oil, soybean oil, safflower oil, palm oil, and/or derivatives thereof, and/or solid fats such as shortening, and the like; as well as inclusions or particulates that are appropriately sized to be extruded through a die without clogging the extruder or the die, and can withstand the high temperatures of the cooking/extrusion process, in conventional amounts.

The inclusion of any amount of any additional ingredients, such as those described above, in the casing component may be adjusted according to the desired taste and texture of the casing component within the scope of the invention.

### Filling

In embodiments of the invention an extruded filling is disposed within an extruded casing component of a co-extruded foodstuff. Preferably, the casing component covers substantially the entire surface of the filling.

Any conventional filler for a snack product that is capable of being extruded through an extrusion die without clogging the extruder or die may be used. The filling can comprise crème, jelly, peanut butter, jam, chocolate, pudding, caramel, spices or seasonings such as cinnamon, cheese, or other edible filler materials, and mixtures thereof. Fillings can include flavorings or other additives such as vanilla or vanillin, mint, fruit extracts, nut extracts, or coffee. Preferred fillings include crème fillings and chocolate fillings, such as a chocolate crème filling. A crème filling can be any conventional crème filling and can include a sweetener, a fat, a flavoring, an emulsifier, or any combination thereof. In some embodiments a filling can include particulates as described below, e.g baked crumbs. The following examples are embodiments of the invention when filling weight is from 20 wt% to 75 wt% of total weight of the co-extruded foodstuff.

In some examples according to the present disclosure, a co-extruded foodstuff includes an extruded filling disposed within an extruded casing, wherein the extruded foodstuff comprises about 30 wt%, about 35 wt%, about 40 wt%, about 45 wt%, about 50 wt%, about 55 wt%, about 60 wt%, about 65 wt%, or about 70 wt% filling of the total weight of the extruded foodstuff.

According to the invention, a co-extruded foodstuff includes an extruded filling disposed within an extruded casing, wherein the extruded foodstuff comprises about 20% to about 75% filling of the total weight of the extruded foodstuff.

In some examples according to the present disclosure, a co-extruded foodstuff includes an extruded filling disposed within an extruded casing wherein the ratio of filling weight to casing weight of the extruded foodstuff is at least 2:1, 1.9:1, 1.8:1, 1.7:1, 1.6:1,1.5:1, 1.4:1, 1.3:1, 1.2:1, 1.25:1, 1.1:1, 1:1, 1:1.1, 1:1.2, or 1:1.25.

In some examples according to the present disclosure, a co-extruded foodstuff includes an extruded filling disposed within an extruded casing wherein the ratio of filling weight to casing weight of the extruded foodstuff is less than 2:1, 1.9:1, 1.8:1, 1.7:1, 1.6:1,1.5:1, 1.4:1, 1.3:1, 1.2:1, 1.25:1, 1.1:1, or 1:1.

In some examples according to the present disclosures, a co-extruded foodstuff includes an extruded filling disposed within an extruded casing wherein the ratio of filling weight to casing weight of the extruded foodstuff is about 4:1, about 3.5:1, about 3:1, about 2.5:1, about 3.5:1.5, about 2:1, about 1.9:1, about 1.8:1, about 1.7:1, about 1.6:1, about 1.5:1, about 1.4:1, about 1.3:1, about 1.2:1, about 1.25:1, about 1.1:1, about 1:1, about 1:1.1, about 1:1.2, about 1:1.25, about 1:1.3, about 1:1.4, about 1:1.5, about 1:3, or about 1:4 by weight.

In some examples according to the present disclosure, a co-extruded foodstuff includes an extruded filling disposed within an extruded casing wherein the ratio of filling weight to casing weight of the extruded foodstuff is from 4:1 to about 1:4 by weight, about 3:1 to about 1:4 by weight, about 1:1.5 to about 3.5:1.5 by weight, about 2:1 to about 1:1 by weight, from about 2:1 to about 1.5:1 by weight, from about 2:1 to about 1.75:1 by weight, about 1.75:1 to about 1.5:1 by weight, from about 1.5:1 to about 1:1 by weight, from about 2:1 to about 1:1.5 by weight.

A filling can be characterized by its viscosity. As used herein, a viscosity measurement of a co-extruded snack product filling is made according to the Brookfield Method, which is used to determine the force required to rotate a spindle in a fluid, where the spindle is a #27 Spindle, the sample fluid is held at 50°C, and the spindle rotated at 20 RPM.

In some embodiments, a co-extruded snack product filling has a viscosity measurement between about 100 cP and about 50000 cP, between about 1000 cP and about 4000 cP, between about 1500 cP and about 35000 cP, between about 2000 cP and about 30000 cP, between about 2.5 Pas (2500 cP) and about 25 Pas (25000 cP), between about 2000 cP and about 10000 cP, between about 5 Pas (5000 cP) and about 15 Pas (15000 cP), between about 10 Pas (10000 cP) and about 20 Pas (20000 cP), or between about 15 Pas (15000 cP) and about 25 Pas (25000 cP)., or between about 20 Pas (20000 cP) and about 30 Pas (30000 cP).

In some embodiments, a co-extruded snack product filling has a viscosity measurement of about 2.5 Pas (2500 cP), about 3 Pas (3000 cP), about 3.5 Pas (3500 cP), about 4 Pas (4000 cP), about 4.5 Pas (4500 cP), about 5 Pas (5000 cP), about 5.5 Pas (5500 cP), about 6 Pas (6000 cP), about 6.5 Pas (6500 cP), about 7 Pas (7000 cP), about 7.5 Pas (7500 cP), about 8 Pas (8000 cP), about 8.5 Pas (8500 cP), about 9 Pas (9000 cP), about 9.5 Pas (9500 cP), about 10 Pas (10000 cP), about 11 Pas (11000 cP), about 12 Pas (12000 cP), about 13 Pas (13000 cP), about 14 Pas (14000 cP), about 15 Pas (15000 cP), about 16 Pas (16000 cP), about 17 Pas (17000 cP), about 18 Pas (18000 cP), about 19 Pas (19000 cP), about 20 Pas (20000 cP), about 21 Pas (21000 cP), about 22 Pas (22000 cP), about 23 Pas (23000 cP), about 24 Pas (24000 cP), or about 25 Pas (25000 cP)., about 26 Pas (26000 cP), about 27 Pas (27000 cP), or about 30 Pas (30000 cP).

In some embodiments, a co-extruded snack product filling has a viscosity measurement of at least 2 Pas (2000 cP), at least 2.5 Pas (2500 cP), at least 3 Pas (3000 cP), at least 3.5 Pas (3500 cP), at least 4 Pas (4000 cP), at least 4.5 Pas (4500 cP), at least 5 Pas (5000 cP), at least 5.5 Pas (5500 cP), at least 6 Pas (6000 cP), at least 6.5 Pas (6500 cP), at least 7 Pas (7000 cP), at least 7.5 Pas (7500 cP), at least 8 Pas (8000 cP), at least 8.5 Pas (8500 cP), at least 9 Pas (9000 cP), at least 9.5 Pas (9500 cP), at least 10 Pas (10000 cP), at least 11 Pas (11000 cP), at least 12 Pas (12000 cP), at least 13 Pas (13000 cP), at least 14 Pas (14000 cP), at least 15 Pas (15000 cP), at least 16 Pas (16000 cP), at least 17 Pas (17000 cP), at least 18 Pas (18000 cP), at least 19 Pas (19000 cP), at least 20 Pas (20000 cP), at least 21 Pas (21000 cP), at least 22 Pas (22000 cP), at least 23 Pas (23000 cP), at least 24 Pas (24000 cP), or at least 25 Pas (25000 cP).

In some embodiments, a co-extruded snack product filling has a viscosity measurement of up to 2.5 Pas (2500 cP), up to 3 Pas (3000 cP), up to 3.5 Pas (3500 cP), up to 4 Pas (4000 cP), up to 4.5 Pas (4500 cP), up to 5 Pas (5000 cP), up to 5.5 Pas (5500 cP), up to 6 Pas (6000 cP), up to 6.5 Pas (6500 cP), up to 7 Pas (7000 cP), up to 7.5 Pas (7500 cP), up to 8 Pas (8000 cP), up to 8.5 Pas (8500 cP), up to 9 Pas (9000 cP), up to 9.5 Pas (9500 cP), up to 10 Pas (10000 cP), up to 11 Pas (11000 cP), up to 12 Pas (12000 cP), up to 13 Pas (13000 cP), up to 14 Pas (14000 cP), up to 15 Pas (15000 cP), up to 16 Pas (16000 cP), up to 17 Pas (17000 cP), up to 18 Pas (18000 cP), up to 19 Pas (19000 cP), up to 20 Pas (20000 cP), up to 21 Pas (21000 cP), up to 22 Pas (22000 cP), up to 23 Pas (23000 cP), up to 24 Pas (24000 cP), up to 25 Pas (25000 cP), up to 26 Pas (26000 cP), up to 27 Pas (27000 cP), or up to 20 Pas (30000 cP).

### Particulate Component

In examples according to the present disclosure, referring again to FIG. 1, a particulate component 110 may at least partially cover the external surface 115 of the casing component 105. While the particulate component, if present, preferably covers at least 80% of the external surface of the casing component, in some embodiments the particulate component covers at least about 20%, at least about 30%, at least about 40%, at least about 50%, at least about 60%, or at least 70% of the external surface 115 of the casing component 105. In embodiments of the present invention, particulate component 110 substantially completely covers external surface 115. In some embodiments, external surface 115 is visible between individual elements of particulate component 110.

In some embodiments a particulate component may form a part of the filling component, e.g., in some embodiments a filling component comprises a particulate component as described herein. In some embodiments a filling component comprises a particulate component that includes crumbs of a baked dough, such as baked cookie crumbs.

The particulate component may include particles of a cocoa (e.g., ground, crushed and/or milled cocoa). Suitable cocoas can include any type of cocoa useful in preparing extruded foodstuffs, including red cocoa, black cocoa, and high flavour cocoa (HFC), or a combination thereof. The particulate component may include a cocoa that consists essentially of HFC. In some embodiments, the particulate component may include a cocoa that consists essentially of red cocoa. In other embodiments, the particular component may include a cocoa that consists essentially of black cocoa. In still other embodiments, the particulate component may include a cocoa that consists essentially of HFC and red cocoa, or consists essentially of HFC and black cocoa. Preferably, the particulate component may include particles of at least one of HFC and red cocoa. For example, the particulate component may include particles of HFC and red cocoa, the particulate component may include particles of HFC and black cocoa, the particulate component may include particles of red cocoa and black cocoa, or the particulate component may include particles of red cocoa, black cocoa, and HFC.

The particulate component may include agglomerated particles. Agglomerated particles can include any particulate edible grouping of particles. In some embodiments, agglomerated particles can include ground particles of extrudate. In other embodiments, agglomerated particles can include particles of cookies, crackers, candy, sugars, salt, other dry flavors, particles of fruits and/or vegetables, dairy powders, or a combination thereof. In still other embodiments, agglomerated particles can include ground particles of baked dough, such as baked dough crumbs. Baked dough crumbs can be formed by grinding a baked dough foodstuff, such as a rotary molded, baked cookie or biscuit. Alternatively, the baked dough crumbs can be commercially available baked dough crumbs, such as cookie crumbs. The inclusion of baked dough crumbs in the extruded foodstuff of the invention may serve to evoke more of the taste and texture experience of a baked cookie product rather than an extruded product. For example, the baked dough crumbs may impart to the extruded foodstuff a crumbly texture or a tender texture, or a combination thereof.

The agglomerated particles within a particular component can vary in shape and size from one agglomerated particle to the next. Finely ground agglomerated particle may improve the adherence of the particulate component to the casing component. Use of finely ground agglomerated particle may also result in a smoother appearance of the coated extruded foodstuff and in a reduction in the messiness of the coated extruded foodstuff.

In some embodiments, the particulate component may further include particles that have a color that contrasts with the color of the casing. Such particles may be referred to as "glitter." Any color that contrasts with the color of the casing is suitable, but in preferred embodiments the glitter is white. Glitter can comprise titanium dioxide and at least one of a gum, sugar, sweetener, gelatin, or polysaccharide.

The coated extruded food products of the invention preferably maintain the general shape of the casing component when the casing component is coated with the particulate component. That is, the coated extruded food products of the invention can take the shape of the casing component, for example, which can be generally spheroid, prolate spheroid, oblate spheroid, cylindrical, and pillow shaped. The particulate coating can impart a more crumby texture to the surface of the extruded foodstuff than is present in that of the casing component alone. Preferably, a co-extruded foodstuff of the invention including a casing component and a particulate component has a generally smooth appearance and leaves minimal crumb residue when handled.

### Binder or Coating

In embodiments of the present invention the extruded foodstuff product further includes a binder or coating disposed over the external surface of the casing component. The binder or coating can serve to adhere the particulate component to the casing component. The binder may also serve to impart the desired level of tenderness and crumbliness to the coated extruded product to evoke the experience of a baked cookie product. The binder or coating can include a sugar or sugar syrup, corn syrup or high fructose corn syrup, polysaccharide, fat, dextrin, maltodextrin, gums, hydrocolloids or combination thereof. A sugar substitute may also be included in the binder. Sugar syrup can include any combination of sugar and water, for example a ratio of sugar to water by weight of from about 20:80 to about 80:20, 22:78 to about 78:22, 25:75 to about 75:25, 27:73 to about 73:27, 30:70 to about 70:30, 32:67 to about 67:32, 35:65 to about 65:35, 37:62 to about 62:37, and is preferably about 60:40. Example polysaccharides include maltodextrin. Exemplary fats include oils such as canola oil, soybean oil, safflower oil, palm oil, and/or derivatives thereof, and/or solid fats such as shortening. Preferably, the binder includes a fat, preferably palm oil or a modified palm oil. Use of a fat in a binder can result in a lighter, crispier texture of the coated extruded foodstuff than use of a sugar syrup. In some embodiments, appropriate selection of a binder and particulate component enhances the organoleptic properties of the foodstuff in terms of both texture and taste. For example, without wishing to be bound by any particular theory, in some embodiments, the friability of the extruded foodstuff when chewed imparts a texture that, to a consumer, is evocative of harder crunchier biscuits such as a rotary molded biscuit.

In some embodiments a co-extruded snack product comprises about 0% to about 1% , about 0% to about 0.5%, about 0% to about 1.5%, about 0% to about 2%, about 0.1% to about 1%, about 0.1% to about 0.5%, about 0.5% to about 1%, or about 0.2% to about 0.8% by weight coating or binder. In some embodiments a co-extruded snack product comprises about 0.1%, about 0.2%, about 0.3%, about 0.4%, about 0.5%, about0.6%, about 0.7%, about 0.8%, about 0.9%, or about 1% by weight coating or binder.

### Method

Any method of extruding a rope to form a casing component known to persons of skill in the art can be used, including methods of co-extruding a filling and a casing component.

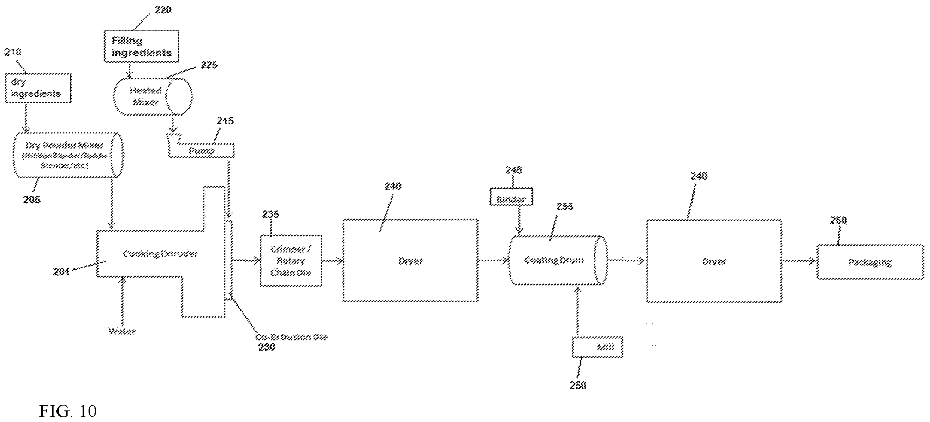

Referring to FIG. 10, the casing component can be made by placing ingredients in a cooking extruder 201. In some embodiments the dry ingredients 205 can be mixed separately from any wet ingredients before each is placed in the cooking extruder. Dry ingredients 205 can be mixed, for example, using a ribbon blender, paddle blender, or any other blender or mixer 210 suitable for combining dry ingredients. The ingredients placed in the cooking extruder can be mixed, heated, and/or compressed and pressed through an extrusion die 230 to form a ribbon. A ribbon as used herein can refer to a rope of any shape including tubular or flat. In embodiments of the present invention, in which a filling is to be disposed inside the casing component, a pump 215 can be used to pump the filling into the casing component extrudate as it exits the cooking extruder and the two components can be co-extruded through an extrusion die 230 to form a co-extruded ribbon. In some embodiments, the ingredients 220 of the filling component are heated and or mixed in a mixer 225 before being pumped into the casing component extrudate. For simplicity, in describing further steps, "extruded ribbon" can include casing component extrudate with a filling or without a filling.

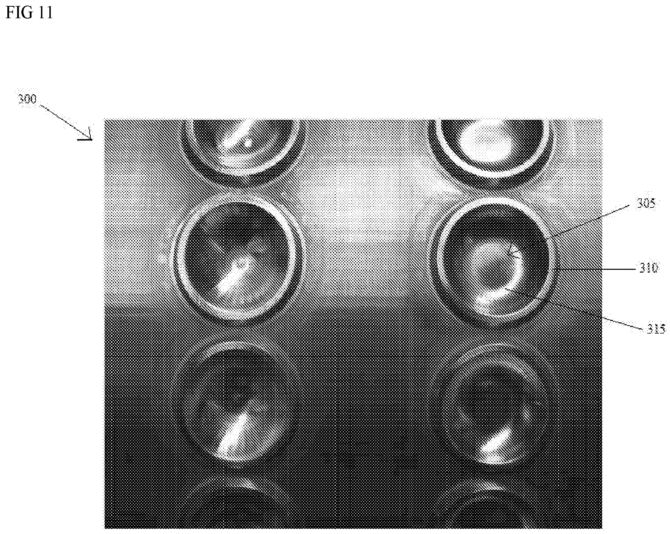

In some embodiments the extruded ribbon can be passed through a crimper 235 to shape the extruded ribbon into individual casing component pieces. A crimper can include two molds facing open to each other, each mounted on a roller. FIG. 11 shows an exemplary crimper mold 300 including two rows of cup-like molds 305 each having an edge 310 and a substantially concave interior 315. The molds 305 are designed to form extruded ribbon into lentil shaped casing components. As the extruded ribbon passes through the rollers, the crimper molds 305 press together with the extruded ribbon in the middle so as to mold the extruded ribbon in the shape of the crimper molds. Each of the crimper molds can have an edge 310 that presses to nearly touch the edge of the opposing crimper mold; the crimper molds might not cut the extruded ribbon into individual pieces, but the mold edges press the extruded ribbon to a sufficiently thin depth that the extruded ribbon can easily be broken into separate individual pieces, such as by hand or using a vibratory pan.

In other embodiments the extruded ribbon can be passed through a cutter, such as a chain die cutter to shape the extruded ribbon into individual pieces and to simultaneously cut the individual pieces apart. The chain die cutter can include two sets of molds that open facing each other through which the extruded ribbon is passed. The edges of each of the molds can be sharp to cut the individual pieces from the extruded ribbon as they are molded.

Referring again to FIG. 10, the individual pieces can be dried, for example in a dryer 240. In some embodiments the moisture in the casing component pieces can be reduced to less than about 5% or less than about 3% through drying. The casing component pieces can be coated with a binder 245 and a particulate coating 250, for example in a coating drum 255. The casing component pieces can be coated with the binder before being coated with a particulate coating, or the binder and particulate coating can be applied simultaneously to the casing component pieces. The coated extruded product can be dried, for example in a dryer 240. In some embodiments the extruded product can be coated with a binder 245 and dried simultaneously. The extruded product or coated extruded product can be cooled after any step. The extruded product or coated extruded product can be packaged 260.

In embodiments where the agglomerated particles include baked dough crumbs, the baked dough crumbs may be made by grinding a baked dough foodstuff to form particulates, such as using a mill. Suitable baked dough foodstuffs can be made using conventional cookie or cracker formulations, or flat bread formulations, and conventional dough forming equipment and machinery and baking ovens. For example, in embodiments of the invention, baked dough foodstuffs for forming baked dough crumbs may be produced using a rotary molder to form dough pieces and the dough pieces may be baked in an oven to obtain baked dough foodstuffs. In other embodiments of the invention, a baked dough foodstuff may be produced by forming a dough sheet, cutting the sheeted dough into pieces, and baking the pieces in an oven to obtain baked dough foodstuffs.

### Examples

The following examples, are not intended to limit the scope of the described invention, and the reader should not interpret them in this way. The following examples are embodiments of the invention when they have proportions of ingredients according to claim 1 or claim 15.

### Example 1.

Coated extruded snack products have been prepared using the components and ingredients in the proportions described in Table 1.

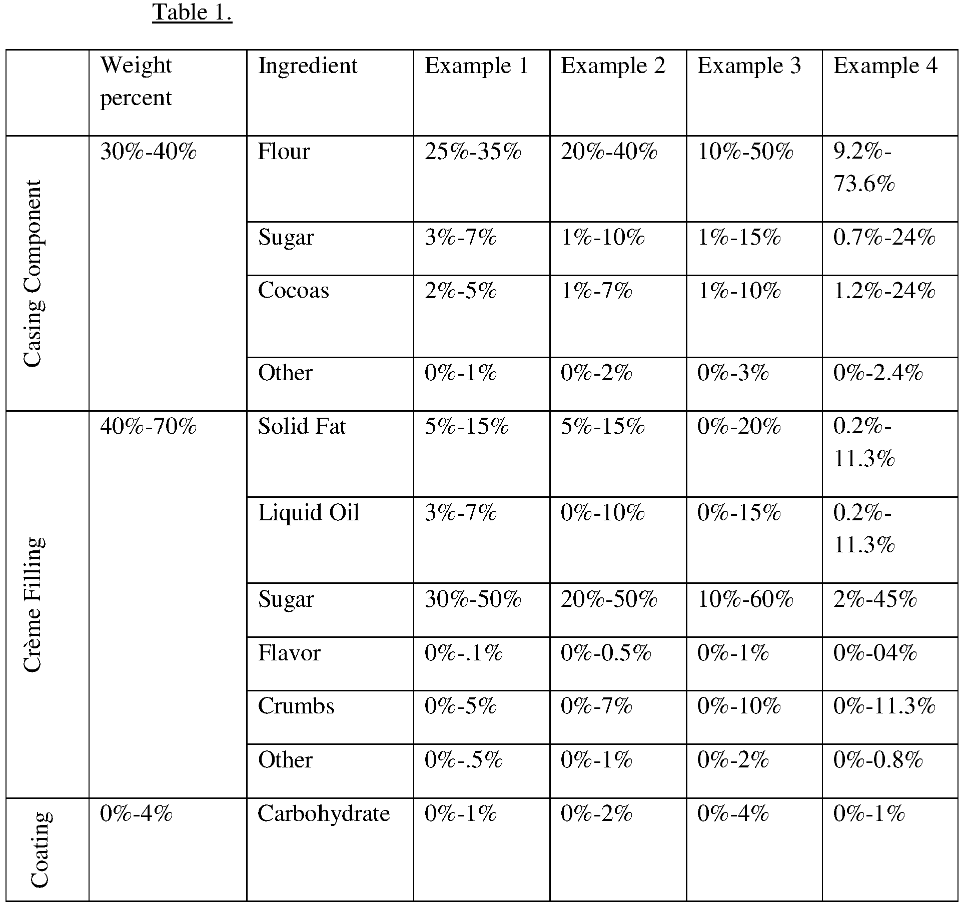

## Claims

1. A crispy co-extruded foodstuff (100) comprising:
an extruded casing (105) having:
a flour component including:
from 37% to 92% by weight wheat flour, and greater than 0 wt% up to 20 wt% of non-wheat flour, wherein the non-wheat flour includes at least one of corn flour, potato flour and rice flour, wherein said flours each refer to a flour or a meal with various particle sizes, and
from 3% to 30% by weight sugar;
an extruded filling (120) disposed within the extruded casing (105) wherein filling weight is from 20 wt% to 75 wt% of total weight of the co-extruded foodstuff (100);
a particulate component (110) completely covering an external surface (115) of the casing (105) and a binder disposed over the external surface of the casing (105) to adhere the particulate component (110) to the casing (105),
wherein the overall co-extruded foodstuff (100) has a density of 0.45 g/mL to 0.85 g/mL.

2. The co-extruded foodstuff (100) of claim 1, comprising 5 wt% to 10 wt% non-wheat flour.

3. The co-extruded foodstuff (100) according to any one of the preceding claims, wherein the non-wheat flour comprises rice flour.

4. The co-extruded foodstuff (100) according to any one of the preceding claims, having a density of 0.6 g/mL to 0.8 g/mL.

5. The co-extruded foodstuff (100) according to any one of the preceding claims, having an Aw of 0.1 to 0.6.

6. The co-extruded foodstuff (100) according to any one of the preceding claims, having a moisture content of 0.5 wt% to 4 wt% of the weight of the co-extruded foodstuff (100).

7. The co-extruded foodstuff (100) according to any one of the preceding claims, wherein the filling (120) has a viscosity of from 2.5 Pas (2500 cP) to 25 Pas (25000 cP).

8. The co-extruded foodstuff (100) according to any one of the preceding claims, wherein the casing (105) comprises 10 wt% to 20 wt% of sugar.

9. The co-extruded foodstuff (100) according to any one of the preceding claims, the foodstuff (100) having a length dimension that is greater than a width dimension and the foodstuff (100) having compressive strength along the width dimension of from 150 g to 1200 g.

10. The co-extruded foodstuff (100) according to any one of the preceding claims, the foodstuff (100) having a length dimension that is greater than a width dimension and the foodstuff (100) having compressive strength along the length dimension of from 220 g to 1300 g.

11. The co-extruded foodstuff (100) according to any one of the preceding claims, wherein the extruded casing (105) comprises 5% to 15% by weight cocoa.

12. The co-extruded foodstuff (100) according to any one claims 1 to 6, wherein the extruded casing (105) further comprises from 3% to 30% by weight cocoa.

13. The co-extruded foodstuff (100) according to any one of claims 1 to 6, wherein the extruded casing (105) further comprises from 9% to 18% by weight cocoa.

14. The co-extruded foodstuff (100) according to any one of claims 1 to 6, wherein the extruded casing (105) further comprises from 10% to 15% by weight cocoa.

15. A method of co-extruding a baked foodstuff (100) comprising:
mixing a casing material comprising from 37% to 92% by weight wheat flour, and greater than 0 wt% up to 20 wt% of non-wheat flour, wherein the non-wheat flour includes at least one of corn flour, potato flour and rice flour, wherein said flours each refer to a flour or a meal with various particle sizes, and from 3% to 30% by weight sugar;
mixing a filling material comprising a solid fat, a liquid fat, and sugar; and
co-extruding the casing material and filling material at filling to casing ratio of 1:4 to 3:1 to produce an extruded rope, and
shaping the extruded rope into individual casing component pieces, and
drying the individual casing component pieces, and
coating the dried individual casing component pieces with a binder (245) and a particulate component;
wherein the particulate component completely covers an external surface of the casing component of the individual casing component pieces, and
wherein the overall co-extruded foodstuff has a density of 0.45 g/mL to 0.85 g/mL.

16. The method according to claim 15, wherein the extruded rope is separated into individual casing component pieces with a cutter or a crimper (235).

## Patentansprüche

1. Knuspriges koextrudiertes Nahrungsmittel (100), umfassend:
eine extrudierte Hülle (105) mit:
einer Mehlkomponente, einschließlich:
zu 37 Gew.-% bis 92 Gew.-% Weizenmehl und mehr als 0 Gew.-% bis 20 Gew.-% Nicht-Weizenmehl, wobei das Nicht-Weizenmehl mindestens eines von Maismehl, Kartoffelmehl und Reismehl einschließt, wobei sich die Mehle jeweils auf ein Mehl oder ein Schrotmehl mit verschiedenen Teilchengrößen beziehen, und
zu 3 Gew.-% bis 30 Gew.-% Zucker;
eine extrudierte Füllung (120), die innerhalb der extrudierten Hülle (105) angeordnet ist, wobei das Füllgewicht 20 Gew.-% bis 75 Gew.-% des Gesamtgewichts des koextrudierten Nahrungsmittels (100) beträgt;
eine teilchenförmige Komponente (110), die eine äußere Oberfläche (115) der Hülle (105) vollständig bedeckt, und ein Bindemittel, das über der äußeren Oberfläche der Hülle (105) angeordnet ist, um die teilchenförmige Komponente (110) an der Hülle (105) anzuhaften,
wobei das gesamte koextrudierte Nahrungsmittel (100) eine Dichte von 0,45 g/ml bis 0,85 g/ml aufweist.

2. Koextrudiertes Nahrungsmittel (100) nach Anspruch 1, umfassend 5 Gew.-% bis 10 Gew.-% Nicht-Weizenmehl.

3. Koextrudiertes Nahrungsmittel (100) nach einem der vorstehenden Ansprüche, wobei das Nicht-Weizenmehl Reismehl umfasst.

4. Koextrudiertes Nahrungsmittel (100) nach einem der vorstehenden Ansprüche mit einer Dichte von 0,6 g/ml bis 0,8 g/ml.

5. Koextrudiertes Nahrungsmittel (100) nach einem der vorstehenden Ansprüche mit einer Aw von 0,1 bis 0,6.

6. Koextrudiertes Nahrungsmittel (100) nach einem der vorstehenden Ansprüche mit einem Feuchtigkeitsgehalt von 0,5 Gew.-% bis 4 Gew.-% des Gewichts des koextrudierten Nahrungsmittels (100).

7. Koextrudiertes Nahrungsmittel (100) nach einem der vorstehenden Ansprüche, wobei die Füllung (120) eine Viskosität von 2,5 Pas (2500 cP) bis 25 Pas (25000 cP) aufweist.

8. Koextrudiertes Nahrungsmittel (100) nach einem der vorstehenden Ansprüche, wobei die Hülle (105) 10 Gew.-% bis 20 Gew.-% Zucker umfasst.

9. Koextrudiertes Nahrungsmittel (100) nach einem der vorstehenden Ansprüche, wobei das Nahrungsmittel (100) eine Längenabmessung aufweist, die größer als eine Breitenabmessung ist, und das Nahrungsmittel (100) eine Druckfestigkeit entlang der Breitenabmessung von 150 g bis 1200 g aufweist.

10. Koextrudiertes Nahrungsmittel (100) nach einem der vorstehenden Ansprüche, wobei das Nahrungsmittel (100) eine Längenabmessung aufweist, die größer als eine Breitenabmessung ist, und das Nahrungsmittel (100) eine Druckfestigkeit entlang der Längenabmessung von 220 g bis 1300 g aufweist.

11. Koextrudiertes Nahrungsmittel (100) nach einem der vorstehenden Ansprüche, wobei die extrudierte Hülle (105) 5 Gew.-% bis 15 Gew.-% Kakao umfasst.

12. Koextrudiertes Nahrungsmittel (100) nach einem der Ansprüche 1 bis 6, wobei die extrudierte Hülle (105) ferner zu 3 Gew.-% bis 30 Gew.-% Kakao umfasst.

13. Koextrudiertes Nahrungsmittel (100) nach einem der Ansprüche 1 bis 6, wobei die extrudierte Hülle (105) ferner zu 9 Gew.-% bis 18 Gew.-% Kakao umfasst.

14. Koextrudiertes Nahrungsmittel (100) nach einem der Ansprüche 1 bis 6, wobei die extrudierte Hülle (105) ferner zu 10 Gew.-% bis 15 Gew.-% Kakao umfasst.

15. Verfahren zum Koextrudieren eines gebackenen Nahrungsmittels (100), umfassend:
Mischen eines Hüllenmaterials, umfassend zu 37 Gew.-% bis 92 Gew.-% Weizenmehl und mehr als 0 Gew.-% bis 20 Gew.-% Nicht-Weizenmehl, wobei das Nicht-Weizenmehl mindestens eines von Maismehl, Kartoffelmehl und Reismehl einschließt, wobei sich die Mehle jeweils auf ein Mehl oder ein Schrotmehl mit verschiedenen Teilchengrößen beziehen, und zu 3 Gew.-% bis 30 Gew.-% Zucker;
Mischen eines Füllmaterials, umfassend ein festes Fett, ein flüssiges Fett und Zucker; und
Koextrudieren des Hüllenmaterials und Füllmaterials bei Füllung-zu-Hülle-Verhältnis von 1 : 4 bis 3 : 1, um einen extrudierten Strang zu erzeugen, und
Formen des extrudierten Strangs zu einzelnen Hüllenkomponentenstücken und
Trocknen der einzelnen Hüllenkomponentenstücke und
Beschichten der getrockneten einzelnen Hüllenkomponentenstücke mit einem Bindemittel (245) und einer teilchenförmigen Komponente;
wobei die teilchenförmige Komponente eine äußere Oberfläche der Hüllekomponente der einzelnen Hüllenkomponentenstücke vollständig bedeckt und
wobei das gesamte koextrudierte Nahrungsmittel eine Dichte von 0,45 g/ml bis 0,85 g/ml aufweist.

16. Verfahren nach Anspruch 15, wobei der extrudierte Strang mit einer Schneideinrichtung oder einer Quetscheinrichtung (235) in einzelne Hüllenkomponentenstücke getrennt wird.

## Revendications

1. Produit alimentaire co-extrudé croustillant (100) comprenant :
une enveloppe extrudée (105) ayant :
un composant de farine incluant :
de 37 % à 92 % en poids de farine de blé, et plus de 0 % en poids jusqu'à 20 % en poids de farine autre que de blé, dans lequel la farine autre que de blé inclut au moins une parmi farine de maïs, farine de pomme de terre et farine de riz, dans lequel lesdites farines font référence chacune à une farine ou à une semoule avec diverses tailles de particules, et
de 3 % à 30 % en poids de sucre ;
un fourrage extrudé (120) disposé à l'intérieur de l'enveloppe extrudée (105) dans lequel le poids de fourrage va de 20 % en poids à 75 % en poids du poids total du produit alimentaire co-extrudé (100) ;
un composant particulaire (110) couvrant complètement une surface externe (115) de l'enveloppe (105) et un liant disposé par-dessus la surface externe de l'enveloppe (105) pour faire adhérer le composant particulaire (110) à l'enveloppe (105),
dans lequel le produit alimentaire co-extrudé global (100) a une masse volumique de 0,45 g/mL à 0,85 g/mL.

2. Produit alimentaire co-extrudé (100) selon la revendication 1, comprenant 5 % en poids à 10 % en poids de farine autre que de blé.

3. Produit alimentaire co-extrudé (100) selon l'une quelconque des revendications précédentes, dans lequel la farine autre que de blé comprend de la farine de riz.

4. Produit alimentaire co-extrudé (100) selon l'une quelconque des revendications précédentes, ayant une masse volumique de 0,6 g/mL à 0,8 g/mL.

5. Produit alimentaire co-extrudé (100) selon l'une quelconque des revendications précédentes, ayant une Aw de 0,1 à 0,6.

6. Produit alimentaire co-extrudé (100) selon l'une quelconque des revendications précédentes, ayant une teneur en humidité de 0,5 % en poids à 4 % en poids du poids du produit alimentaire co-extrudé (100).

7. Produit alimentaire co-extrudé (100) selon l'une quelconque des revendications précédentes, dans lequel le fourrage (120) a une viscosité allant de 2,5 Pa·s (2500 cP) à 25 Pa·s (25 000 cP).

8. Produit alimentaire co-extrudé (100) selon l'une quelconque des revendications précédentes, dans lequel l'enveloppe (105) comprend 10 % en poids à 20 % en poids de sucre.

9. Produit alimentaire co-extrudé (100) selon l'une quelconque des revendications précédentes, le produit alimentaire (100) ayant une dimension en longueur qui est supérieure à une dimension en largeur et le produit alimentaire (100) ayant une résistance en compression le long de la dimension en largeur allant de 150 g à 1200 g.

10. Produit alimentaire co-extrudé (100) selon l'une quelconque des revendications précédentes, le produit alimentaire (100) ayant une dimension en longueur qui est supérieure à une dimension en largeur et le produit alimentaire (100) ayant une résistance en compression le long de la dimension en longueur allant de 220 g à 1300 g.

11. Produit alimentaire co-extrudé (100) selon l'une quelconque des revendications précédentes, dans lequel l'enveloppe extrudée (105) comprend 5 % à 15 % en poids de cacao.

12. Produit alimentaire co-extrudé (100) selon de quelconques revendications 1 à 6, dans lequel l'enveloppe extrudée (105) comprend en outre de 3 % à 30 % en poids de cacao.

13. Produit alimentaire co-extrudé (100) selon l'une quelconque des revendications 1 à 6, dans lequel l'enveloppe extrudée (105) comprend en outre de 9 % à 18 % en poids de cacao.

14. Produit alimentaire co-extrudé (100) selon l'une quelconque des revendications 1 à 6, dans lequel l'enveloppe extrudée (105) comprend en outre de 10 % à 15 % en poids de cacao.

15. Procédé de coextrusion d'un produit alimentaire cuit (100) comprenant :
le mélange d'un matériau d'enveloppe comprenant de 37 % à 92 % en poids de farine de blé, et plus de 0 % en poids jusqu'à 20 % en poids de farine autre que de blé, dans lequel la farine autre que de blé inclut au moins une parmi farine de maïs, farine de pomme de terre et farine de riz, dans lequel lesdites farines font référence chacune à une farine ou une semoule avec diverses tailles de particules, et de 3 % à 30 % en poids de sucre ;
le mélange d'un matériau de fourrage comprenant une matière grasse solide, une matière grasse liquide, et du sucre ; et
la coextrusion du matériau d'enveloppe et du matériau de fourrage à un rapport du fourrage à l'enveloppe de 1:4 à 3:1 pour produire un cordon extrudé, et
la mise en forme du cordon extrudé en morceaux individuels de composant d'enveloppe, et
le séchage des morceaux individuels de composant d'enveloppe, et
l'enrobage des morceaux individuels de composant d'enveloppe séchés avec un liant (245) et un composant particulaire ;
dans lequel le composant particulaire couvre complètement une surface externe du composant d'enveloppe des morceaux individuels de composant d'enveloppe, et
dans lequel le produit alimentaire co-extrudé global a une masse volumique de 0,45 g/mL à 0,85 g/mL.

16. Procédé selon la revendication 15, dans lequel le cordon extrudé est séparé en morceaux individuels de composant d'enveloppe avec un organe de coupe ou une sertisseuse (235).
